# EUROPEAN PATENT APPLICATION

(11) **EP 1 804 246 A2**
(43) Date of publication of application: **04.07.2007**
(21) Application number: 06126398.4
(22) Date of filing: 18.12.2006
(51) Int. Cl.: G11B 27/32, G11B 20/12

(54) **Information recording medium and information recording method**

(30) Priority: 28.12.2005 JP 2005377824
(71) Applicant: KABUSHIKI KAISHA TOSHIBA, Tokyo 105-8001 (JP)
(72) Inventor: Ogawa, Akihito, Toshiba Corporation,, Minato-ku, Tokyo 105-8001 (JP); Noda, Chosaku, Toshiba Corporation,, Minato-ku, Tokyo 105-8001 (JP)
(74) Representative: Henkel, Feiler & Hänzel

(57) **Abstract**

According to one embodiment, an information recording medium which is configured to record information includes a first area (2105, 2106) which stores first information indicating the range of a currently formatted area, and a second area (2107, 2108) which stores second information indicating the range of a previously formatted area.

## Description

One embodiment of the invention relates to a recordable information recording medium, and an information recording method for recording information on the information recording medium.

As recording media that can record a large volume of information such as a video signal and the like, DVDs (digital versatile discs) have prevailed. Along with popularization of rewritable recording media such as a DVD-RW which has a high compatibility to a DVD-ROM as a read-only medium, it has become possible to record broadcast video data on a DVD, to edit such video data, and to watch the video data using a player at home. A rewritable recording medium needs to hold management information to manage the recorded state of user data, and a recordable management area used to record management information is assured on the inner or outer periphery side of a data area. Such configurations are disclosed in references such as Jpn. Pat. Appln. KOKAI Publication No. 2000-285462 (reference 1) and ECMA-338. These media need formatting by a use method of a disc prior to the beginning of recording of user data, and also need formatting when the use method is to be changed. The formatting takes a very long period of time.

As in a technique described in reference 1 above, a conventional rewritable recording medium needs formatting upon using a disc, and the formatting takes a very long period of time.

It is an object of the invention to provide an information recording medium which allows formatting within a short period of time by simplifying the formatting method, and an information recording method of recording information on that information recording medium.

An information recording medium according to one aspect of the invention comprises: a first area which stores first information indicating a range of a currently formatted area; and a second area which stores second information indicating a range of a previously formatted area.

An information recording method according to one aspect of the invention is directed to an information recording method for recording information on an information recording medium which is configured to rewrite information, and independently comprises a first area that stores user information, and a second area that stores management information including information indicating a formatted area for the user information, comprises: a step of formatting the first area; and a step of formatting the second area.

The invention can be more fully understood from the following detailed description when taken in conjunction with the accompanying drawings, in which:
FIG. 1 is a block diagram of an information recording and playback system according to an embodiment of the invention;
FIG. 2 is a block diagram of an information recording and playback system according to another embodiment of the invention;
FIG. 3 is a block diagram of an optical disc apparatus according to the embodiment;
FIG. 4 is a view showing an information recording layer of an optical disc according to the embodiment;
FIG. 5 is a view showing a guide groove of the optical disc according to the embodiment;
FIG. 6 is a view showing the layout of the optical disc according to the embodiment;
FIG. 7 is a view showing details of the layout on the inner periphery side of the optical disc according to the embodiment;
FIG. 8 is a view showing details of the layout on the outer periphery side of the optical disc according to the embodiment;
FIG. 9 is a table showing the physical specifications of an embossed area (system lead-in area) and rewritable recording area (data lead-in or lead-out area) of the optical disc according to the embodiment;
FIG. 10 is a view showing the configuration of a BCA area according to the embodiment;
FIG. 11 is a table showing an example of information recorded on the BCA area according to the embodiment;
FIG. 12 is a view showing details of a book type and disc type of a BCA record according to the embodiment;
FIGS. 13A and 13B are tables showing format information of the embossed area according to the embodiment;
FIGS. 14A and 14C are tables showing format information of a recordable management area according to the embodiment;
FIG. 15 is a view showing details of a management zone according to the embodiment;
FIG. 16 is a table showing details of lead-in recording management information according to the embodiment;
FIG. 17 is a table showing the configuration of recording management information according to the embodiment;
FIGS. 18A to 18D are tables showing details of field 0 of the recording management information according to the embodiment;
FIGS. 19A and 19B are views showing details of a disc state and padding state management information according to the embodiment;
FIG. 20 is a table showing details of field 1 of the recording management information according to the embodiment;
FIGS. 21A and 21B are tables showing details of field 3 of the recording management information according to the embodiment;
FIG. 22 is a view showing the configuration of a data segment according to the embodiment;
FIG. 23 is a view showing a change in state of a disc according to the embodiment;
FIG. 24 is a view showing an empty state of the disc according to the embodiment;
FIG. 25 is a view showing an intermediate recording state of the disc according to the embodiment;
FIG. 26 is a view showing a complete state of the disc according to the embodiment;
FIG. 27 is a lead-out block size according to the embodiment;
FIG. 28 is a view showing the recording sequence for an unrecorded disc according to the embodiment;
FIG. 29 is a view showing the sequence of full formatting according to the embodiment;
FIG. 30 is a view showing the sequence of quick formatting according to the embodiment;
FIG. 31 is a view showing the sequence of extension formatting;
FIG. 32 is a view showing another sequence of quick formatting according to the embodiment;
FIG. 33 is a view showing the sequence of quick extension formatting according to the embodiment;
FIG. 34 is a view showing another sequence of quick extension formatting according to the embodiment;
FIG. 35 is a view showing the close sequence according to the embodiment;
FIG. 36 is a view showing the sequence of complete erase formatting according to the embodiment;
FIG. 37 is a view showing the sequence of management zone formatting according to the embodiment;
FIG. 38 is a view showing the sequence of full formatting using the maximum formatted zone final physical sector number according to the embodiment;
FIG. 39 is a view showing the sequence of extension formatting using the maximum formatted zone final physical sector number according to the embodiment;
FIG. 40 is a view showing the sequence of quick formatting using the maximum formatted zone final physical sector number according to the embodiment;
FIG. 41 is a view showing another sequence of quick formatting using the maximum formatted zone final physical sector number according to the embodiment;
FIG. 42 is a view showing the sequence of quick extension formatting using the maximum formatted zone final physical sector number according to the embodiment;
FIG. 43 is a view showing another sequence of quick extension formatting using the maximum formatted zone final physical sector number according to the embodiment;
FIG. 44 is a view showing the sequence for erasing an old lead-out block upon full formatting according to the embodiment;
FIG. 45 is a view showing another sequence for erasing an old lead-out block upon full formatting according to the embodiment;
FIG. 46 is a view showing another sequence for erasing an old lead-out block upon quick formatting according to the embodiment;
FIG. 47 is a view showing the sequence for automatically extending a formatted zone by the optical disc apparatus according to the embodiment;
FIG. 48 is a block diagram of a dual-layer disc according to an embodiment of the invention;
FIG. 49 is a view showing an information recording layer of the dual-layer optical disc according to the embodiment;
FIG. 50 is a view showing details of the layout on the inner periphery side of the dual-layer optical disc according to the embodiment;
FIG. 51 is a view showing details of the layout on the outer periphery side of the dual-layer optical disc according to the embodiment;
FIG. 52 is a view showing an intermediate recording state of the dual-layer optical disc;
FIG. 53 is a view showing a complete state of the dual-layer optical disc;
FIG. 54 is a first view showing extension of an intermediate recordable management area of the dual-layer optical disc;
FIG. 55 is a second view showing extension of an intermediate recordable management area of the dual-layer optical disc;
FIG. 56 is a view showing the storage sequence of the formatted zone physical sector number of the dual-layer optical disc according to the embodiment;
FIG. 57 is a view showing the use sequence of the formatted zone physical sector number of layer 0 of the dual-layer optical disc according to the embodiment;
FIG. 58 is a view showing the use sequence of the formatted zone physical sector number of layer 1 of the dual-layer optical disc according to the embodiment;
FIG. 59 is a view showing the use sequence of the contiguous recording zone outermost periphery physical sector number of layer 1 of the dual-layer optical disc according to the embodiment;
FIG. 60 is table showing details of field 3 of the recording management information according to another embodiment;
FIG. 61 is a view showing the use sequence of the formatted zone physical sector number of layer 0 of the dual-layer optical disc according to another embodiment;
FIG. 62 is a view showing the use sequence of the formatted zone physical sector number of layer 1 of the dual-layer optical disc according to another embodiment; and
FIG. 63 is a view showing the use sequence of the contiguous recording zone outermost periphery physical sector number of layer 1 of the dual-layer optical disc according to another embodiment.

Various embodiments according to the invention will be described hereinafter with reference to the accompanying drawings. In general, according to one embodiment of the invention, an information recording medium which is configured to record information comprises a first area which stores first information indicating the range of a current formatted zone, and a second area which stores second information indicating the range of a previous formatted zone.

Embodiments of the invention will be described in detail hereinafter with reference to the accompanying drawings.

### (Optical Disc Recording and Playback System)

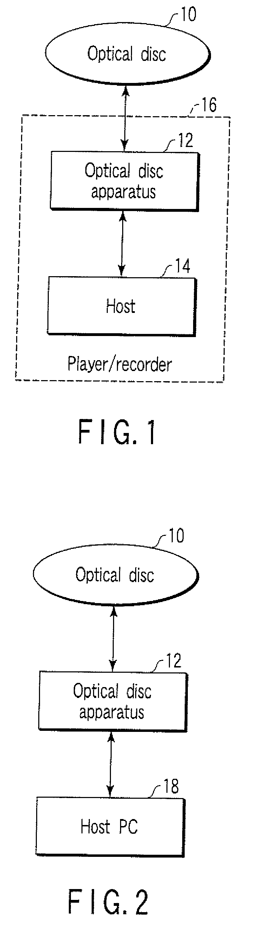

FIGS. 1 and 2 are block diagrams each showing the blocks of an information recording and playback system according to one embodiment of the invention.

The information recording and playback system shown in FIG. 1 comprises an optical disc 10 as a medium which is used to record and play back information such as video data, user data, and the like, an optical disc apparatus 12 which records information on the optical disc 10 and plays back information from the optical disc 10, and a host unit 14 which issues commands to the optical disc apparatus 12 to read out needed information from the optical disc 10 via the optical disc apparatus 12 and to make playback of video data, presentation of information to the user, and the like.

An apparatus 16 such as an optical disc recorder or player incorporates the optical disc apparatus 12 and host unit 14, as shown in FIG. 1. The host unit 14 comprises a CPU (Central Processing Unit), a RAM (Random Access Memory) used as a work area, and a nonvolatile memory such as an EEPROM (Electrically Erasable and Programmable ROM), flash memory, or the like, which records and holds setting parameters and various other data which should be held even after power OFF. These memories record various programs executed in response to user's requests, data needed for processing, file systems needed for file management, and the like. For example, these memories store a UDF bridge file system of the DVD Video format, a UDF file system of the DVD Video Recording format, a UDF file system of the next-generation Video format, a UDF file system of the next-generation Video Recording format, application software, and the like.

On the other hand, in a system using a personal computer and the like, the personal computer serves as a host PC 18, as shown in FIG. 2. Instructions are issued to the optical disc apparatus 12 by executing an OS (operating system) or application software such as writing software, video playback software, or the like.

### (Optical Disc Apparatus)

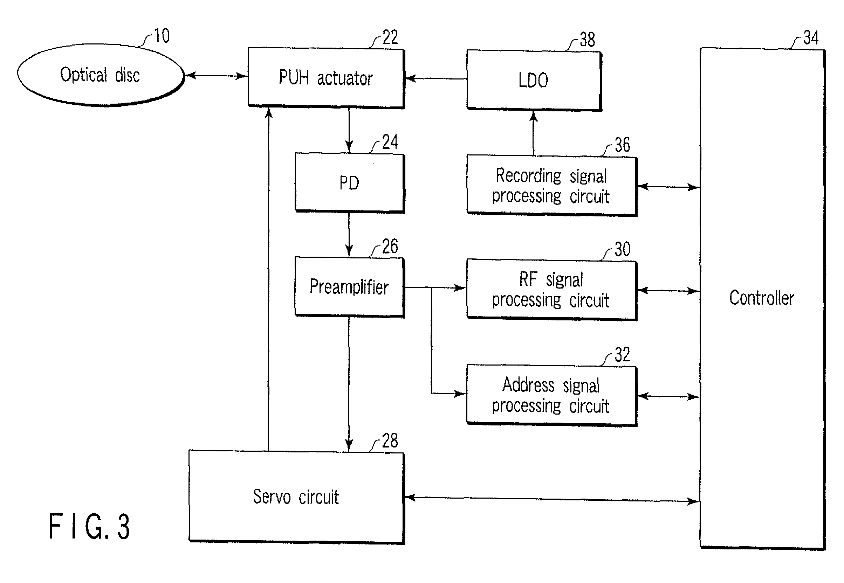

FIG. 3 is a block diagram showing the optical disc apparatus according to one embodiment of the invention.

The optical disc apparatus performs recording and playback of information by focusing a laser beam emitted from a pickup head (PUH) actuator 22 onto an information recording layer of the optical disc 10. The beam reflected by the optical disc 10 passes through an optical system of the PUH actuator 22, and is detected as an electrical signal by a photodetector (PD) 24. The detected electrical signal is amplified by a preamplifier 26, and is output to a servo circuit 28, RF signal processing circuit 30, and address signal processing circuit 32. The servo circuit 28 generates a focus servo signal, tracking servo signal, tilt servo signal, and the like, which are output to the PUH actuator (focus, tracking, and tilt actuators) 22. Demodulation methods upon reading recorded data, an address signal, and the like in the RF signal processing circuit and address signal processing circuit 32 include a slice method and PRML (Partial Response Maximum Likelihood) method. The optical disc apparatus selects an optimal demodulation method depending on the focused beam spot size formed by the optical disc 10 which is to undergo recording and playback and the PUH actuator 22. The slice method includes a method of binarizing a signal after linear waveform equalization is applied to a playback signal, a method of binarizing a signal after the signal is equalized by a nonlinear equalizer called a limit equalizer which limits low-frequency, high-amplitude components of the playback signal to a constant value, and the like.

As for the PRML method, an optimal PR class, for example, PR(1, 2, 2, 21), PR(1, 2, 1), PR(1, 2, 2, 1), PR(3, 4, 4, 3), or the like is selected in correspondence with the frequency characteristics of a playback signal. The address signal processing circuit 32 reads out physical address information indicating the recording position on the optical disc by processing the detected signal, and outputs the physical address information to a controller 34. The controller 34 reads out data such as user data or the like at a desired position or records data at a desired position based on this address information. In this case, a recording signal processing circuit 36 modulates the data to a recording waveform control signal suited to optical disc recording. An LD drive circuit (LDD) 38 controls a laser diode (LD) in the PUH actuator 22 to emit a laser beam based on this signal, thus recording information on the optical disc 10.

In this embodiment, the wavelength of the laser diode is 405 ± 15 nm. Also, the NA value of an objective lens used to focus the beam having the above wavelength on the optical disc in the PUH actuator 22 is 0.65. As the intensity distribution of an incident beam immediately before the beam enters the objective lens, a relative intensity at the objective lens periphery (aperture boundary position) when the central intensity = "1" is called "RIM Intensity". The RIM Intensity value in the HD DVD format is set to fall within the range from 55 to 70%. The wavefront aberration amount in the PUH actuator 22 at that time is optically designed to a maximum of 0.33λ (0.33λ or less) with respect to the use wavelength λ.

### (Optical Disc)

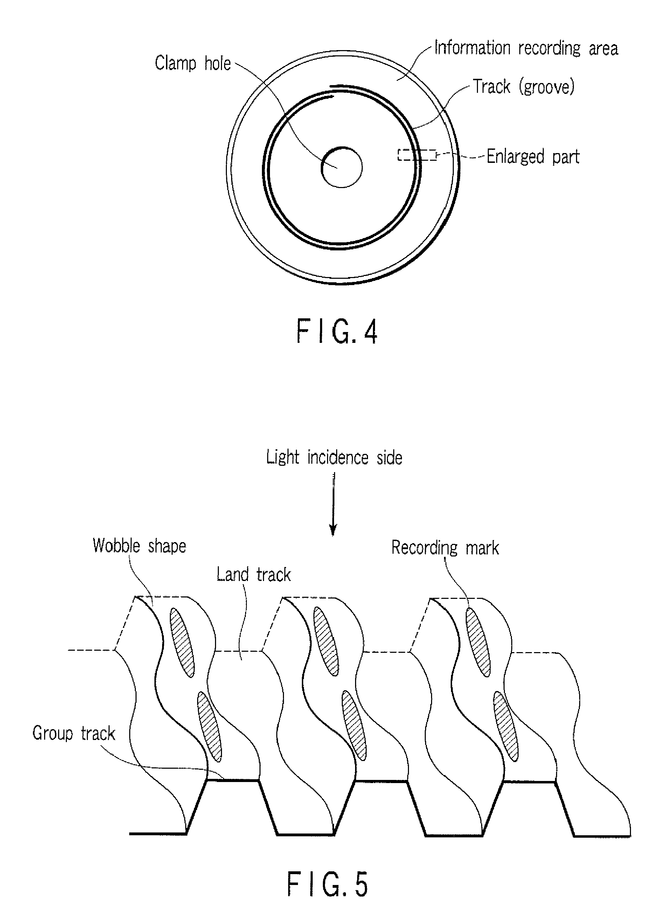

FIG. 4 is a view showing the information recording layer of the optical disc according to one embodiment of the invention. FIG. 5 is a view showing an enlarged part shown in FIG. 4.

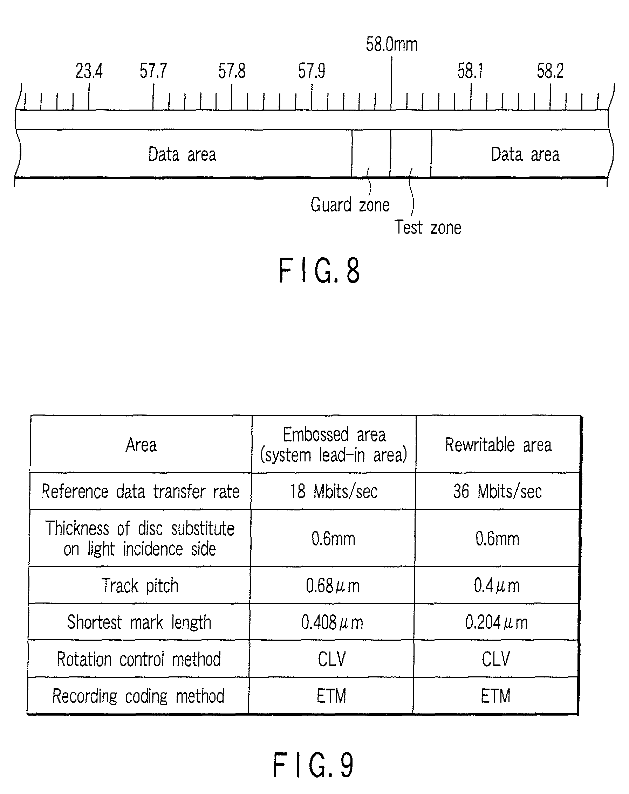

This embodiment will mainly explain a case of one information recording layer per optical disc. However, if there are a plurality of information recording layers, the effect of the invention can be obtained. In this case, data areas which extend across a plurality of layers can be considered as a single data area. FIG. 9 shows the physical specifications of an embossed area and rewritable recording area of the optical disc of the invention. Note that "CLV" in the row of "rotation control method" is a short for "Constant Linear Velocity", and means a rotation control method that maintains a linear velocity constant. "ETM" (Eight to Twelve modulation) is one of modulation methods, and is a method of converting every 8 information bits signal into 12 channel bits having a redundancy upon recording a signal. With this redundancy, the reliability of information recording and playback improves spectacularly compared to a case wherein information bits are directly recorded on the optical disc.

On the information recording layer of the optical disc, concaves and convexes, i.e., a groove, which serve as a guide groove for information recording and playback, are formed, as shown in FIG. 5. In FIG. 5, the front side viewed from the light incidence side is called a groove, and the back side is called a land. Discs include those which record data on only a groove, those which record data on only a land, and whose which record data on both the groove and land. Furthermore, this guide groove wobbles in a sine wave pattern in the radial direction. By switching the phase of this sine wave, physical address information indicating the physical position on the information recording area and information unique to the disc are recorded. A wobble modulation area includes 16 out of 93 wobbles, and 1 symbol corresponding to 1 bit of information to be recorded in a wobble signal is formed of 4 wobbles. The wobble shape is not particularly limited to this, but a description will be given with reference to this value unless otherwise specified.

### (Layout of Information Area)

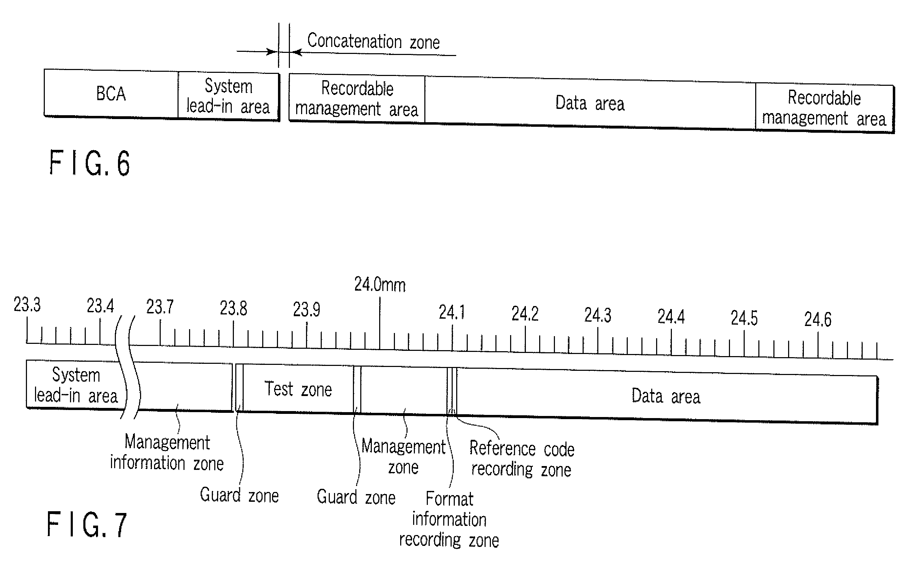

FIG. 6 shows the layout of the information recording layer. The area configuration of the layer is partitioned into a BCA (Burst Cutting Area) area, system lead-in area, data lead-in area (lead-in recordable management area), data area, and data lead-out area (lead-out recordable management area) from the inner periphery side. The BCA area pre-records BCA marks formed by grooves of a substrate, peelings of a reflection film, or changes in recording medium. The BCA marks are comb-shaped marks which are modulated in the circumferential direction of the optical disc, and are defined by lining up a plurality of pieces of identical information in the radial direction. A BCA code is recorded by modulation using the RZ modulation method. A pulse with a narrow pulse width (= low reflectance) has to be narrower than half the channel clock width of this modulated BCA code. Since the BCA marks have an identical shape in the radial direction, information can be played back by focusing without any tracking.

The system lead-in area records information by embossed pits. This information is management information of the optical disc such as identification information of the disc, the data area size, and the like. The shortest mark length of the embossed pit in this area assumes a value twice that of the data area. As a result, the data area is played back using the PRML method, but the information in the system lead-in area can be demodulated even using the slice method, thus improving the reliability of reading of information. Since the system lead-in area records management information as a basis of information reading of the disc, copy right management information, and the like, it is important to improve the reading reliability of the system lead-in area.

A groove which serves as a guide groove is also formed on each recordable management area as in the data area. This area records signals at the same density as the data area. On this area, a test write zone, a management zone used to recognize the recording state of the data area, a tracking overrun zone for DPD tracking, and the like are allocated. The data area records data such as video data, user data, and the like.

### (Detailed Layout)

FIGS. 7 and 8 show examples of the detailed layouts of information areas on the inner and outer periphery sides of the optical disc according to one embodiment of the invention. The BCA area (not shown) is allocated at the innermost periphery side. The system lead-in area is allocated next to the BCA area. The system lead-in area is partitioned into an initial zone, buffer zone, and control data zone, and the control data zone stores format information. In the data lead-in area, a guard zone and test area (616 physical segment (PS) blocks), management zone (500 PS blocks), format information recording zone (7 PS blocks), and reference code recording zone (1 PS block) are allocated. The guard zone records dummy data or is maintained unrecorded so as to take an overrun measure of DPD tracking and to prevent recording errors. The test zone is used to make a test write to optimize the recording waveform before management information or user information is recorded on the optical disc. The management zone records management information used to manage the state of data which is being recorded on the data area. The format information recording zone can be used by either a recorder/player or a player, and records format information indicating the recording state of the disc. When this format information recording zone in the optical disc of the invention records given prescribed data, this optical disc can be played back by a player. When this format information recording zone is maintained unrecorded or records dummy data, data without any prescribed flag, or the like, the area indicates that the player cannot play back this disc.

In the data lead-out area, two guard zones and a test zone are allocated, as shown in FIG. 8. The guard zone on the inner periphery side may record data to take an overrun measure of DPD tracking, but the guard zone on the outer periphery side is always maintained unrecorded.

### (Contents of BCA)

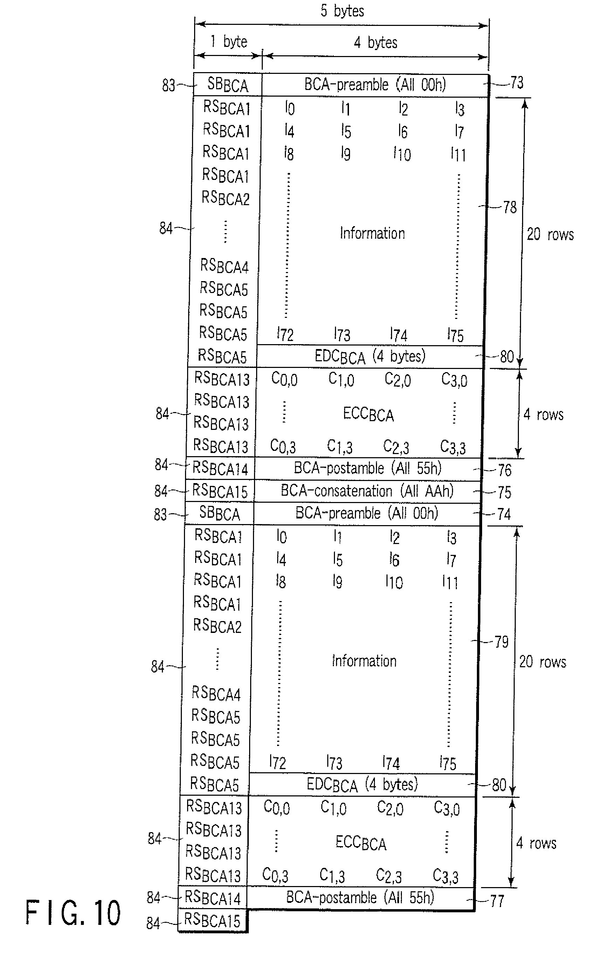

FIG. 10 shows the contents of information recorded in the BCA area of the optical disc according to one embodiment of the invention. BCA data has two BCA preambles 73 and 74, two postambles 76 and 77, and two BCA data areas (BCAA) 78 and 79. Each of the BCA data areas (BCAA) 78 and 79 is appended with a BCA error detection code EDC_{BCA} 80 and BCA error correction code ECC_{BCA}, and a BCA concatenation area 75 is allocated between these areas. Furthermore, sync bytes SB_{BCA} 83 or resync bytes RS_{BCA} 84 of 1 byte each are inserted every 4 bytes. The BCA preambles 73 and 74 have a 4-byte configuration, and record all "00h". The sync byte SB_{BCA} 83 is allocated immediately before each of the BCA preambles 73 and 74. In each of the BCA data areas (BCAA) 78 and 79, 76 bytes are set. The BCA postambles 76 and 77 have a 4-byte configuration, and record a repetitive pattern of all "55h". The BCA concatenation area 75 has 4-byte configuration, and record a repetitive pattern of all "AAh".

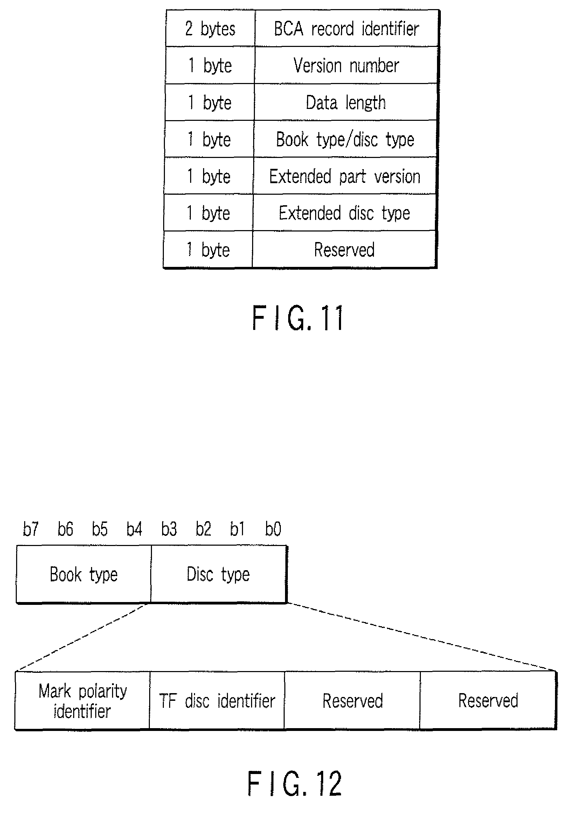

The BCA data area records one or a plurality of pieces of information to have a BCA record as one unit. The information to be recorded is, e.g., identification information of the disc or copy control information. FIG. 11 shows an example of the BCA record which represents the identification information of the disc. A BCA record identifier which represents the type (identification information, copy control information, etc.) of that BCA record is recorded in first 2 bytes. Next, the version number (1 byte) of the BCA record indicating its format is recorded. A data length (1 byte) that determines the size of the BCA record is recorded after the version number. This length does not include 4 bytes from the BCA record identifier to the data length as the header of the BCA record.

Next, a 1-byte book type and disc type are recorded. The book type is an identifier which represents the format of the disc, and a read-only type, write once type, or the like. In the disc type, information is assigned to each bit, as shown in FIG. 12. The most significant bit of the disc type records a polarity identifier indicating whether the reflectance of the recording mark (pit) is higher (Low to High recording) or lower (High to Low recording) than a non-mark (pit) part, and the next bit records an identifier indicating whether or not that disc is a twin-format (TF) disc having different formats for respective layers. When the TF disc identifier is 0 (binary), it indicates that the disc is not a TF disc; when the identifier is 1, it indicates that the disc is a TF disc. Furthermore, a 1-byte extended part version and extended disc type are recorded, and the last 1 byte is reserved. The reserved byte of the disc type and extended disc type can store tracking polarity information, the number of information recording layers, and the like.

Since the BCA stores these pieces of information, it can be played back by applying focusing servo to the BCA area at the innermost periphery side of the disc. Furthermore, the format, type, signal polarity, and the like of the disc can be immediately determined based on the playback result. After that, the processing for accessing the data area and recordable management area of a desired layer, and enabling tracking servo can be speeded up.

### (Contents of Format Information of System Lead-in Area)

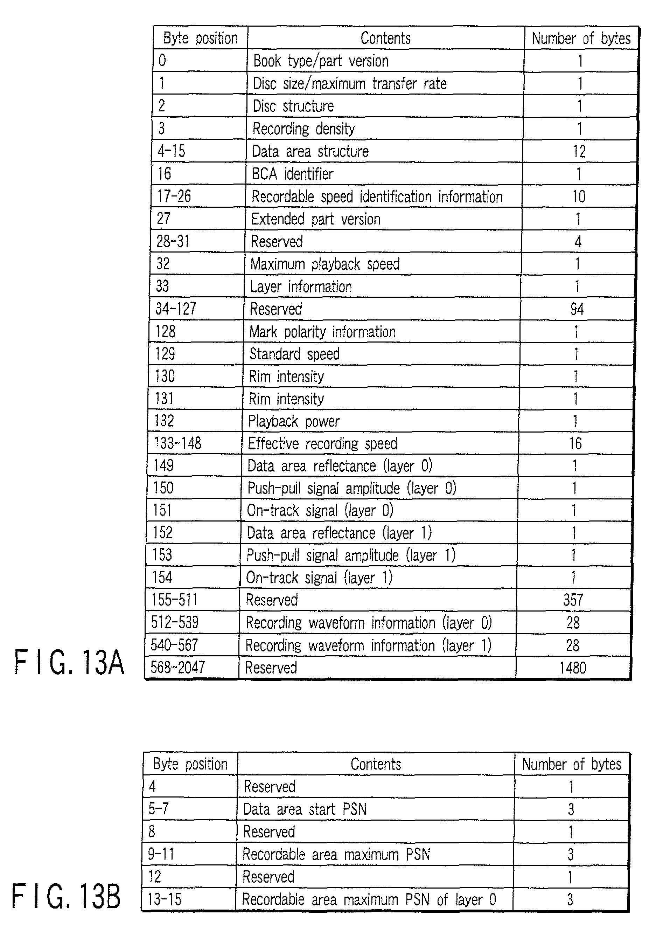

FIG. 13A shows the contents of format information of the system lead-in area provided to layer 0.

A book type is an identifier which represents the format of the disc, and a read-only type, write once type, rewritable type, or the like. A part version is version management information of that format. A disc size records information indicating the diameter of that disc. For example, the disc size records 0000b for a 12-cm disc or 0001b for an 8-cm disc. A maximum transfer rate records the maximum transfer rate needed to normally play back data recorded on the disc if necessary. A disc structure records the number of layers of that format, information indicating whether a track on each layer runs from the inner periphery side to the outer periphery side or from the outer periphery side to the inner periphery side, and information indicating whether that layer is of read-only type, write once type, or rewritable type. Note that the number of layers is not that of the disc but that of the format. A recording density records information representing the density and track pitch in the disc tangential direction. A data area structure records the default start and end addresses of the data area. A BCA identifier records information indicating the presence/absence of the BCA. Recordable speed identification information records information representing a recording speed that allows recording on the disc. An extended part version records extended information of a part version. A maximum playback speed records a maximum linear speed needed to normally play back data recorded on the disc. Layer information records the disc type allocated on layer 0 and layer 1.

Mark polarity information records information indicating whether the reflectance of a recording mark is higher or lower than an unrecorded part. If this information records 00000000b, it indicates that the reflectance of the recording mark is higher than the unrecorded part; if the information records 10000000b, it indicates that the reflectance of the recording mark is lower than the unrecorded part. Standard speed information records a standard recording speed. For example, in the optical disc of this embodiment, the standard recording speed is 6.6 m/s. Next, rim intensity information records the value of the PUH rim intensity upon determining recording waveform information to be described later. Playback power information designates the value of playback power needed upon playing back the data area.

Effective recording speed information records all actual recording speed values supported by that disc. A data area reflectance indicates the reflectance after data is recorded on the data area. In this case, if the mark polarity information is 00000000b, the data area reflectance records that of a mark part; if the information is 10000000b, the data area reflectance records that of a non-mark (space) part.

Push-pull signal amplitude information records a value obtained by normalizing a push-pull signal by a sum signal, and track information indicating a track which is to undergo recording or playback. If the track information is 0b, recording or playback of a signal is executed on the group; if it is 1b, recording or playback of a signal is executed on the land. On-track signal information records a value obtained by standardizing the sum signal level of an unrecorded part by the maximum reflection level of the system lead-in area. In case of, for example, a disc having two recording layers, layer 0 stores information of a layer on the front side viewed from the disc surface, and layer 1 stores information of a layer on the back side. If a disc has only one recording layer, layer 0 stores information, and layer 1 is padded with all "0" data.

Recording waveform information records optimal recording waveform information recommended by a disc vendor. This information includes peak and bottom power values of a recording waveform, values of the start and end positions of first, intermediate, and last pulses, and the like.

FIG. 13B shows the detailed contents of the data area structure. The data area structure records the start physical sector number (PSN) of the data area and recordable area maximum physical sector number (PSN). Note that the start physical sector number of the data area is 30000h in case of a single-layer disc. Also, that number is 40000h in case of a dual-layer disc. This is because the dual-layer disc has many guard zones to avoid the influence of inter-layer crosstalk in which the two layers interfere with each other. In case of the single-layer disc, the recordable area maximum physical sector number (PSN) of layer 0 is padded with all "0" data.

### (Contents of Format Information of Recordable Management Area)

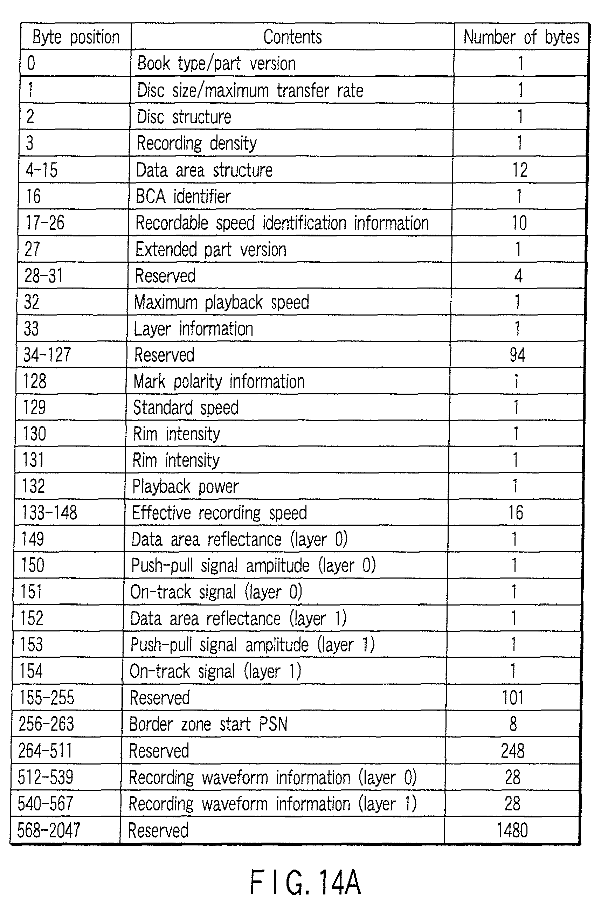

FIG. 14A shows format information to be recorded in the format information recording zone of the recordable management area. This information is recorded in the recordable management area while the optical disc apparatus records information on the disc. Note that a plurality of pieces of information record the same values as those in the format information of the system lead-in area except for data area structure information and the start physical sector number of a border zone.

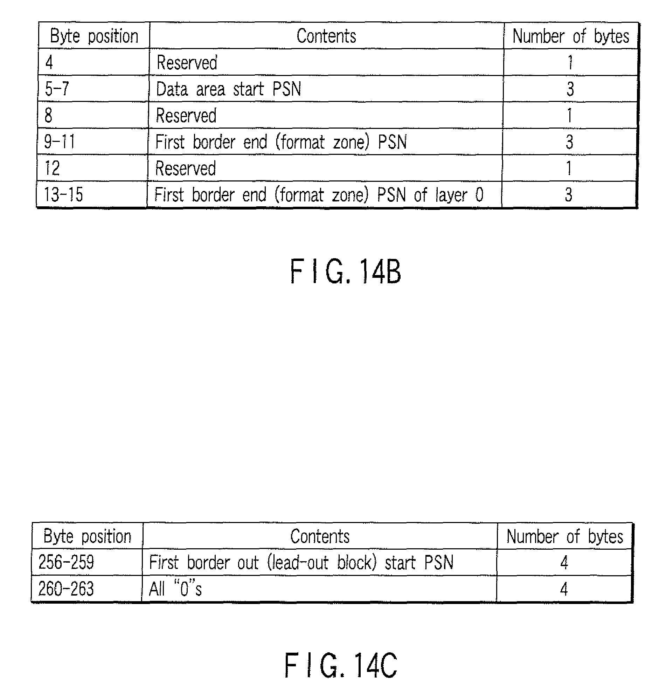

FIG. 14B shows the contents of the data area structure in the format information of the recordable management area. This data area structure records the start physical sector number (PSN) of the data area, and the end physical sector number (PSN) of a format zone (to be described later). In case of a dual-layer disc, the data area structure also stores the end physical sector number (PSN) of the format zone of layer 0. This value changes in response to an extension command of an intermediate recordable management area (to be described later). In case of a single-layer disc, this field is padded with all "0" data. Unlike in the format information of the system lead-in area, the end physical sector number (PSN) of the format zone of the optical disc in a complete state is recorded. User data is recorded in the format zone, and data is not recorded outside the format zone or old data merely remains unerased if it is stored. Therefore, the optical disc apparatus can detect an information readable range of the optical disc by playing back this information. When the end physical sector number (PSN) of the format zone is padded with all "0" data, the optical disc apparatus can determine that the optical disc is not closed, i.e., it is not in a complete state.

FIG. 14C shows details of the start physical sector number (PSN) of the border zone in the format information of the recordable management area. When the optical disc has a plurality of bordered areas, i.e., format zones in the data area, the border zone is configured by a border-out and border-in. The start physical sector number (PSN) of the border-out and the start physical sector number (PSN) of the border-in are recorded. On the other hand, when the next border area is inhibited from being created, the start physical sector number of the border-in is padded with all "0" data. In case of an optical disc having only one format zone in the data area, the start physical sector number of the border-out records the start physical sector number of a lead-out block. In this case, if this field is padded with all "0" data, it indicates that the disc is not closed, i.e., it is not in a complete state.

### (Management Zone)

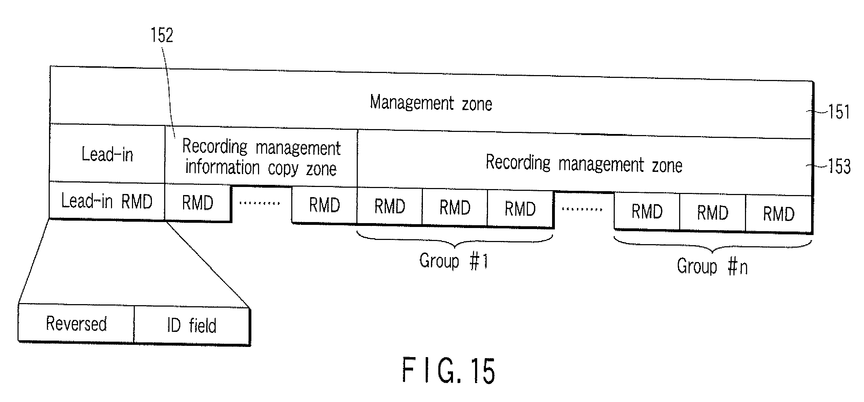

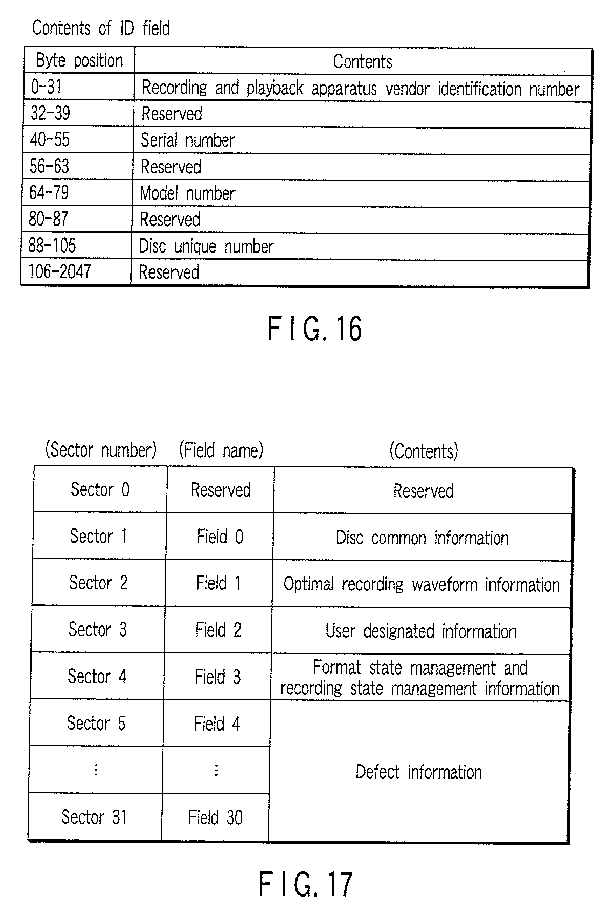

FIG. 15 shows the configuration of the management zone. The first block of the management zone records lead-in recording management data. The next 127 blocks of the management zone are assigned a recording management data copy zone. The remain areas are assigned a recording management zone. Note that the lead-in recording management data is information recorded when the optical disc apparatus records data in the management zone for the first time. This data is divided into a reserved field and ID field, which repetitively records a recorder/player vendor identification number as the identification number of a vendor of the optical disc apparatus which performs recording, and a serial number and model number of that apparatus, as shown in FIG. 16. The optical disc apparatus records a number unique to each disc in a disc unique number so as to identify the disc.

The recording management data copy zone records a copy of the recording management data (RMD) as needed. For example, when RMD is recorded in the recording management zone a predetermined number of times, or at the time of the format operation, eject operation, or unload operation, a copy is recorded. Therefore, in a conventional DVD-RW or the like, a PMA (Program Management zone) is divided into two areas, which record different types (Format2, Format3, etc.) of management information. However, the embodiment of the invention has the following merits: since both the two pieces of management information have identical contents, the state of the disc can be managed in an integrated fashion, and the search time of the latest RMD is nearly the same as that of the prior art.

The recording management data (RMD) indicating the recording state of the data area is recorded in the recording management zone. Note that a plurality of RMD are managed as one group. The group records RMD with the same contents except for an RMD number of RMD group information. The information of the RMD is updated for each group. Therefore, even when some RMD in the group cannot be read out due to defects or the like, correct data can be read out from the remaining RMD. The recording position of this group is assigned number for each group like #0, #1, #2, ....

FIG. 17 shows the configuration of the recording management data. The recording management data is configured by 32 physical sectors, and the first sector is a reserved field. The next and subsequent fields are assigned numbers for each item, and record different kinds of information.

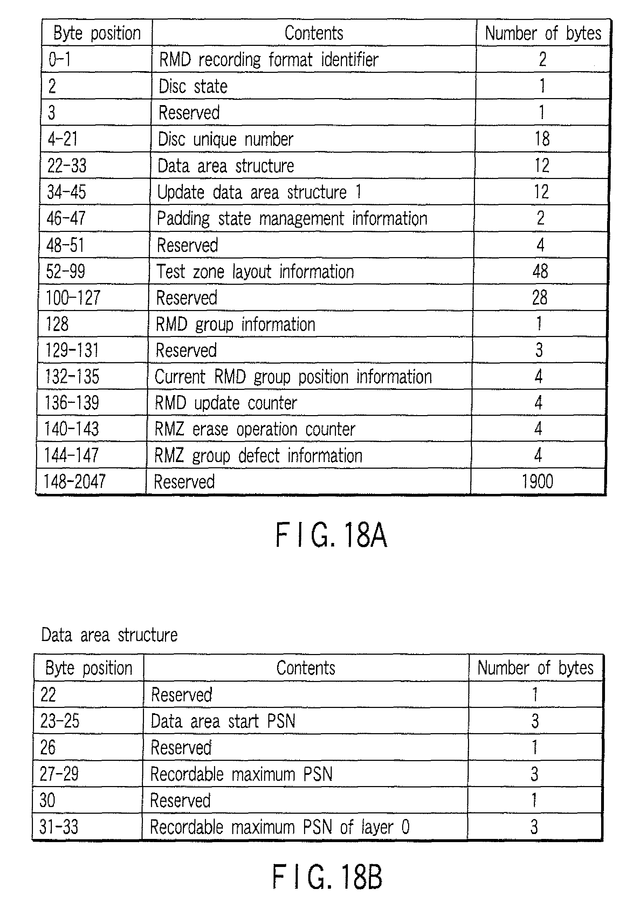

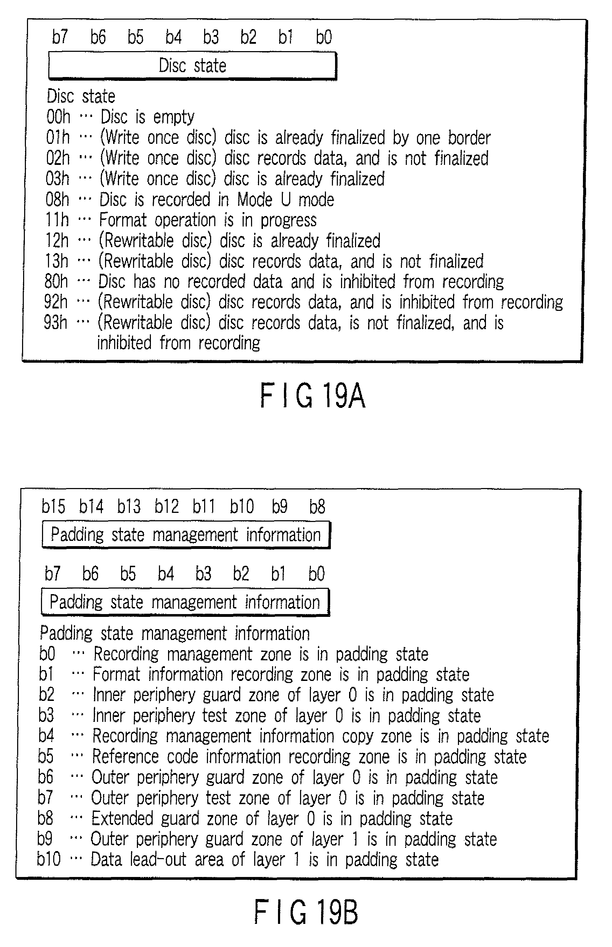

FIG. 18A shows information in field 0. An RMD recording format identifier records information indicating the data recording format of the RMD. Disc state information records information shown in FIG. 19A. For example, if the disc state information is 00h, it indicates that no data area data is recorded or no effective format zone is formed. If the disc state information is 03h, it indicates that the disc is write once type disc, and has been finalized. If the disc state information is 08h, it indicates that the disc has undergone recording in a drive unique mode. If the disc state information is 11h, it indicates that the disc is undergoing formatting. If the disc state information is 12h, it indicates that the disc is a rewritable type, and is closed. If the disc state information is 13h, it indicates that the disc is a rewritable type, data is recorded on the data area, and is not closed. Information indicating recording inhibition in respective states is assigned to 80h, 92h, and 93h.

FIG. 18B shows details of the data area structure in the recording management data. These bytes record the same values as in the data area structure of the format information of the system lead-in area.

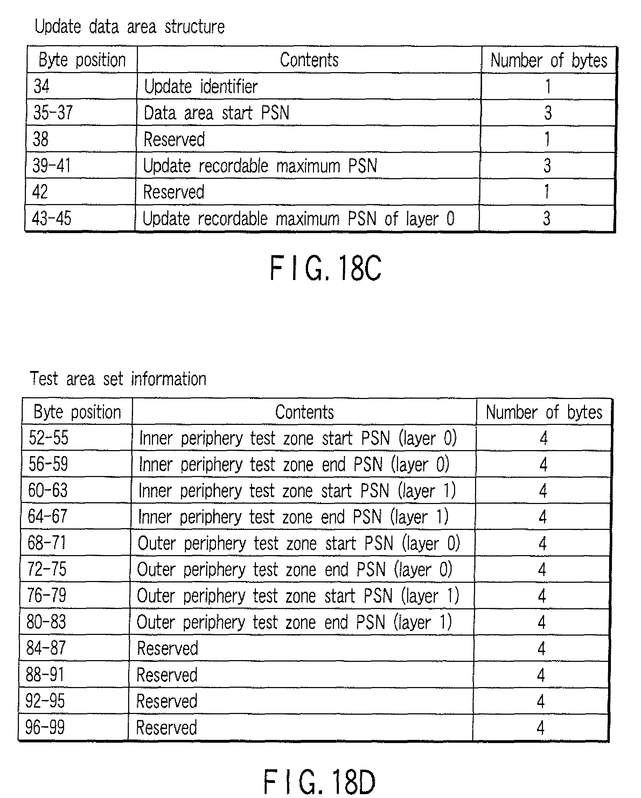

FIG. 18C shows the contents of an updated data area structure. The updated data area structure records the values of the data area structure after these values are changed upon formatting, closing, or erasure. Especially, an updated recordable maximum physical sector number (PSN) stores the end physical sector number of the format zone in case of a disc in a complete state. On the other hand, in case of a disc in an intermediate recording state, the updated recordable maximum physical sector number (PSN) stores 00h or the maximum physical sector number of the data area. In case of a dual-layer disc, the updated recordable maximum physical sector number also stores an updated recordable maximum physical sector number (PSN) of layer 0. This value changes in response to an extension command of an intermediate recordable management area (to be described later). A disc update identifier is information indicating the state when the data area structure is changed. When the data area structure is changed upon formatting, the disc update identifier records 1h; or when it is changed upon closing, the identifier records 2h.

FIG. 19B shows the contents of padding state management information. Respective bits of the padding state management information are assigned respective areas of the optical disc. Each bit stores information indicating whether or not some data is recorded on the area of interest irrespective of padding, i.e., valid or dummy data. If this bit is 1b, it indicates that the area has surely undergone padding. If this bit is 0b, it indicates that the area is unrecorded or padded information is lost.

Since the optical disc of the invention can determine based on this management information the recording state of the format information in the recording management zone or the recordable management area, for example, whether or not the format information of the recordable management area is to be overwritten can be immediately determined upon quick formatting (to be described later). As a result, the time period need for formatting can be shortened. Although not shown, the next bit of the padding state management information may store recording content management information. The recording content management information is assigned each area of the optical disc, the recording management data copy zone, the recording management zone, the format information, reference code information, or the like for each bit like in the padding state management information. If this bit is 1b, it indicates that the area records valid data; or if this bit is 0b, it indicates that the area records no data, or it records invalid data such as dummy data or the like.

FIG. 18D shows the contents of test zone layout information. The position of the test zone may change due to extension or shift. Hence, this byte records the latest start physical sector number and end physical sector number of the test zone (an inner periphery test zone, outer periphery test zone, or extended test zone) or the latest size of the area. In this manner, the test zone can be quickly retrieved.

The RMD group information records the size of the RMD group, and information indicating the RMD order in the group. For example, if the RMD group includes five RMD, the size is 5, the order of the first RMD is 1, and that of the next RMD is 2. An RMD update counter is incremented by one every time new RMD is recorded. Therefore, the RMD and RMD group corresponding to the largest value of this counter correspond to the latest RMD and RMD group.

Current RMD group position information indicates the address or number of the latest RMD group. Using this current RMD group position information and the recording management data copy zone, the latest RMD can be retrieved quickly. That is, the recording management data copy zone is played back first to read out the current RMD group position information of its latest RMD, the control jumps to these, and the true latest RMD recorded on the recording management zone is retrieved from there. An RMD erase operation counter is incremented by one every time the RMD is erased. RMD group defect information is a bitmap indicating the defect state of the RMD group. Each byte of this information is assigned the number of the RMD group, and if a defective RMD group is found, the corresponding bit is changed from 0b to 1b.

Note that the defective RMD group means that three out of five RMD of the group become unreadable. This information may be recorded for each RMD in place of the RMD group. In this case, all RMD in the management zone are assigned for respective bytes, and when a given RMD becomes defective, the corresponding bit may be changed from 0b to 1b. In this case, how many RMD in the group become defective to inhibit the RMD group from being used can be determined later. In either case, the RMD group or RMD information corresponding to the bit = 1b of the defect information is handled as information with low reliability, and when a given RMD group is determined to be defective, the next RMD group is used.

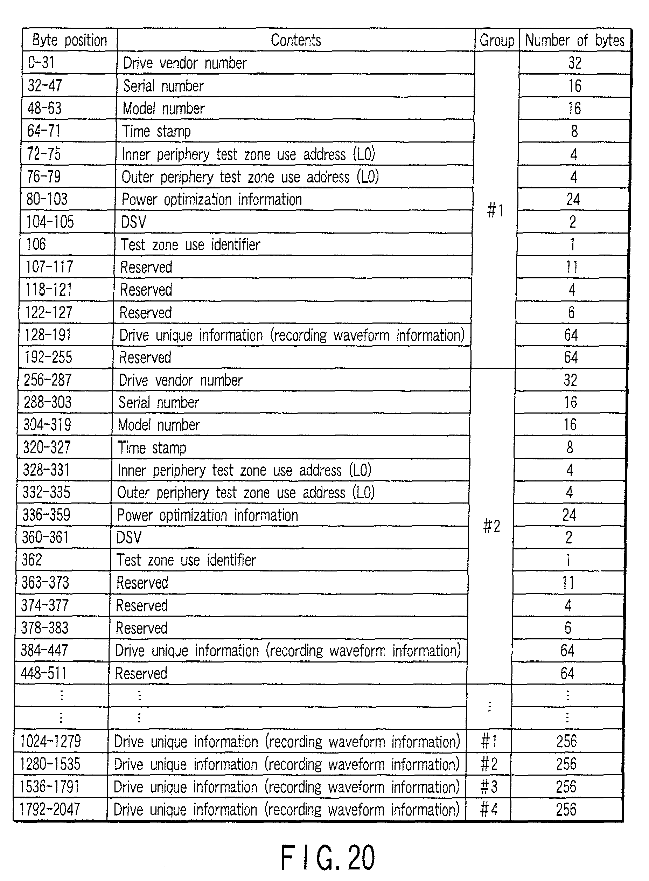

FIG. 20 shows information of field 1. Field 1 records information of the optical disc apparatus that records data on the optical disc, information of the test zone used, and recording waveform information that allows recording in a format unique to the drive. These pieces of information are combined every 256 bytes, and are named like #1 and #2. Although not shown, such combinations are available up to #4, and remaining bytes are reserved. Test zone use address information is independently prepared for each of the inner periphery, outer periphery test zone, and extended test zone. The test zone use address information records the last address of the test zone which is used by the apparatus or it records the already stored address information when the apparatus does not use any test zone, and 0 is recorded in a test zone use identifier. In a state wherein the extended test zone is not extended, an extended area use address records all "0" data.

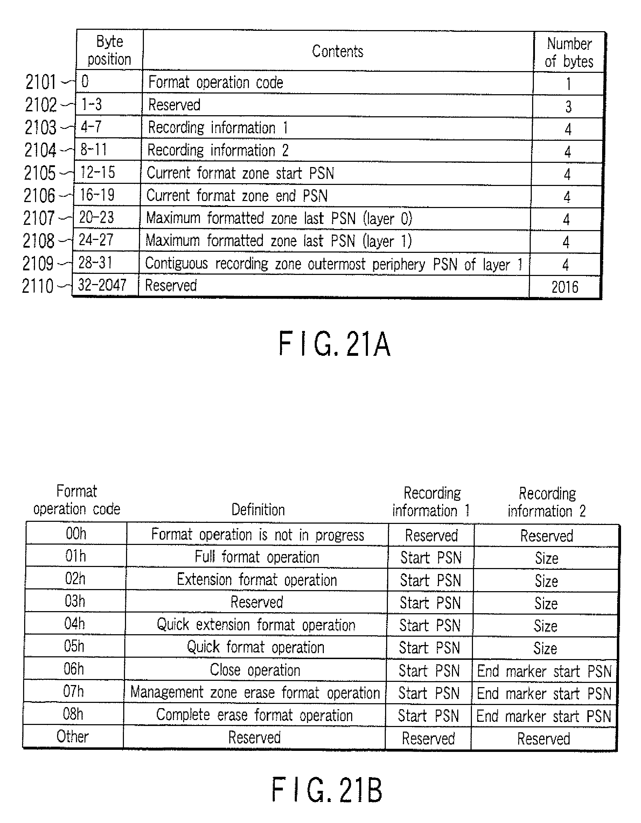

FIG. 21A shows the contents of field 3. Field 3 records management information of a format operation state, and that of the recording state of the data area. A format operation code records information shown in FIG. 21B. If the format operation code is 00b, it can be determined that the format operation is not executed. If the format operation code is 01b, it can be determined that a full format operation is in execution.

In the optical disc of the invention, management zone erase formatting and complete erase formatting which are conventionally recognized as independent operations are added in addition to full formatting and extension formatting, and are managed in an integrated fashion using one type of RMD. In this manner, data can be recorded without switching the format type unlike in the conventional DVD-RW.

Likewise, FIG. 21B shows the contents of recording information 1 and recording information 2. Recording information 1 stores the start physical sector number (PSN) of the format operation, and recording information 2 stores the size of the area to be formatted or the start physical sector number (PSN) of an end marker block.

A current format zone start physical sector number stores the start physical sector number of the format zone in the data area. When the format zone is formed in the data area, the current format zone start physical sector number records an address "30000h" for a single-layer disc, "40000h" for a dual-layer disc, or the like, and is padded with all "0" data when no format zone is formed. A current format zone last physical sector number (PSN) stores the last physical sector number (PSN) of the format zone in the data area. A maximum formatted zone last physical sector number (PSN) stores the last physical sector number (PSN) of the previously formatted zone.

In case of the dual-layer disc, these numbers are independently stored for respective layers. Furthermore, in case of the dual-layer disc, when the inner periphery side of layer 1 is contiguously recorded from the data lead-out area, i.e., when the disc is in a complete state, the outermost periphery physical sector number (PSN) of the format zone of layer 1, i.e., the format zone start physical sector number (PSN) of layer 1 is also stored.

As a result, upon extending the current format zone, if its size is smaller than the maximum formatted zone last physical sector number (PSN), dummy recording of the data area can be skipped (to be described later).

### (Structure of Recording Data)

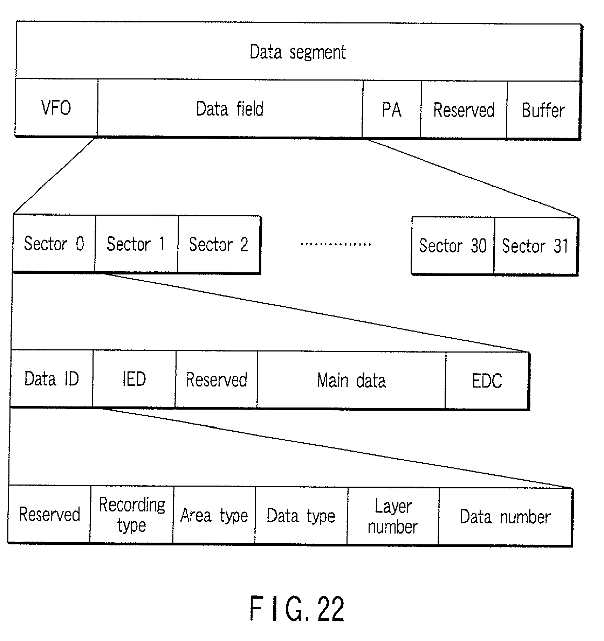

FIG. 22 shows the structure of data to be recorded according to the embodiment of the invention. The recording data is managed while being segmented into data segments. Each data segment physically corresponds to a physical segment (PS) block, and data for one data segment is recorded within the range of one PS block on the optical disc. The data segment includes a VFO, data field, postamble (PA), reserved field, and buffer field. The VFO records a fixed contiguous pattern used to stably extract data clocks upon playback. The postamble is a special pattern indicating the end of data, and the buffer field is allocated as a data field destruction prevention field when PS blocks are recorded to overlap each other. The data field is configured by 32 sectors, and each sector has a Data ID and its error detection code (IED), and main data and its error detection code (EDC). The main data stores data such as the aforementioned management information, user data, and the like. The Data ID stores management information such as a recording type, area type, data type, and layer number, and a data frame number assigned to each sector as a serial number.

Note that the area type represents the attribute of that sector, and is defined by, e.g., 2 bytes. If the area type is 00b, it represents a data area attribute; if the area type is 01b, it represents a lead-in management area attribute; if the area type is 10b, it represents a lead-out management area attribute; or if the area type is 11b, it represents an intermediate management area attribute. The data type represents the type of data of that sector. For example, assume that the data type is defined by 1 byte. If the data type is 0b, it indicates that the main data is normal data. On the other hand, if the data type is 1b, it indicates that the main data is dummy data for padding which is automatically recorded by the optical disc apparatus.

### (Change in State of Disc)

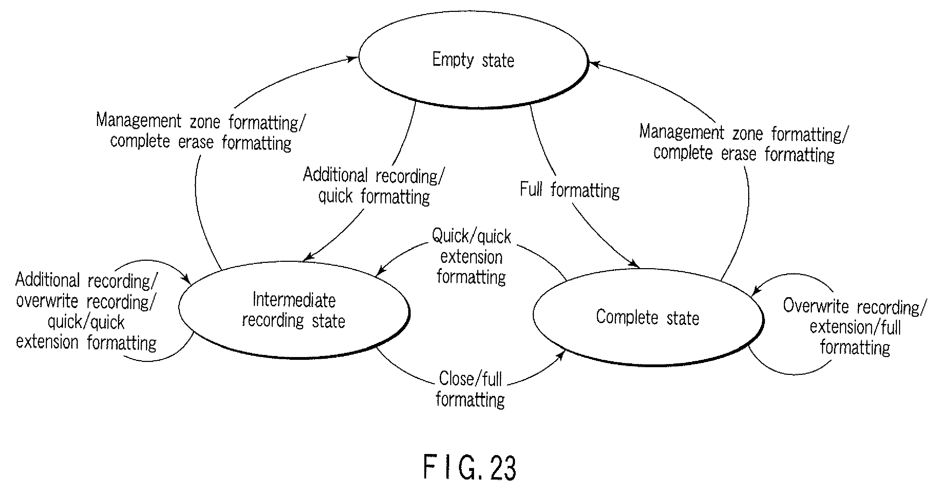

FIG. 23 shows the types of formatting, and changes in state of the disc. Initially, the disc does not undergo any recording, i.e., is in an empty state. The optical disc of the invention can undergo information recording without formatting since the format information is managed in an integrated fashion. However, in order to record data on the disc without discontinuity, the recording start position is fixed at the head of the data area, and additional recording has to be done at contiguous addresses.

When information is recorded on the disc, the disc state becomes an intermediate recording state. In the intermediate state, additional recording of data, overwrite recording on the already recorded area, quick extension formatting, and the like are allowed. In the intermediate state, since the format information in the recordable management area is not valid, and a lead-out zone after the format zone is small, the disc in such state has low compatibility to a read-only disc, and it is difficult to play back such disc by a read-only optical disc apparatus. On the other hand, additional recording of data is allowed.

Also, quick formatting is allowed. However, upon execution of quick formatting, user data recorded on the data area is erased. Upon execution of a close operation or full formatting, the disc state becomes a complete state. In this case, overwrite recording on the already recorded area and extension formatting on the disc are allowed. In the complete state, since padding of the management zone and recording of valid format information are made, and a sufficient lead-out zone is assured after the format zone, the disc in such state has high compatibility to a read-only disc, and it becomes possible to easily play back that disc by a read-only optical disc apparatus.

Full formatting is also allowed. However, upon execution of full formatting, user data recorded on the data area is erased. In order to resume the complete state to the intermediate state, quick formatting or quick extension formatting can be executed. In order to resume the disc in the complete state or intermediate state to the empty state, management zone erase formatting or complete data erase formatting can be executed. From any state, by setting the disc state of the RMD to a recording inhibition state, information recording on the data area of the disc can be inhibited.

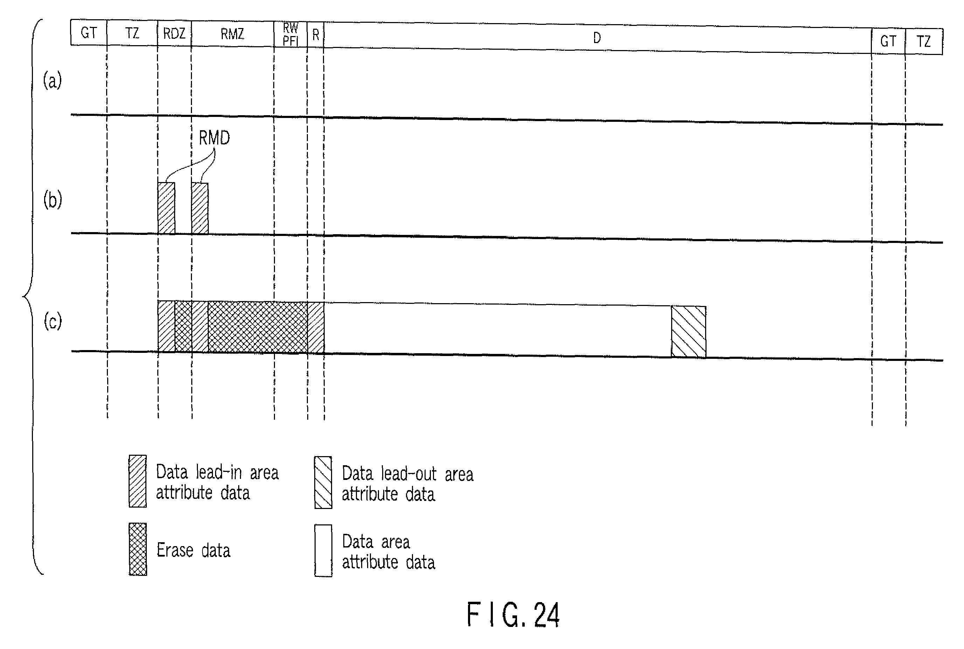

FIG. 24 shows an example of the empty state of the optical disc according to one embodiment of the invention. "GT" represents the guard zone; "TZ", the test zone; "RDZ", the recording management data zone; "RMZ", the recording management zone; "RWPFI", the format information recording zone; "R", the reference code information recording zone; and "D", the data area.

FIG. 24 ((a) in FIG. 24) shows a completely unrecorded state. FIG. 24 ((b) in FIG. 24) shows a state wherein only RMD are recorded on the disc. In this case, the data area does not undergo any recording. If the disc state information of the RMD is 00h, it is determined that the disc is in the empty state. FIG. 24 ((c) in FIG. 24) shows the state after execution of management zone erase formatting. In this case, previously recorded data remain unerased on the data area. However, the management area is erased, and information of the lead-out zone of the format zone or the like is lost. The first non-defective RMD group on the recording management zone records valid RMD, and other areas are padded with erase data. The disc state information of the valid RMD is 00h. This state can also be considered as an unrecorded state.

Note that the erase data is data whose main data is padded with 00h in case of the data area, or data whose specific area information is invalid or data whose main data is padded with a special pattern such as 00h, AAh, FFh, or the like in case of the management area. The data whose specific area information is invalid indicates data in which the end physical sector number (PSN) of the format zone is 00h in case of the format information, or is data in which the disc state is 00h and the update counter is padded with all "1" or "0" data in case of the RMD.

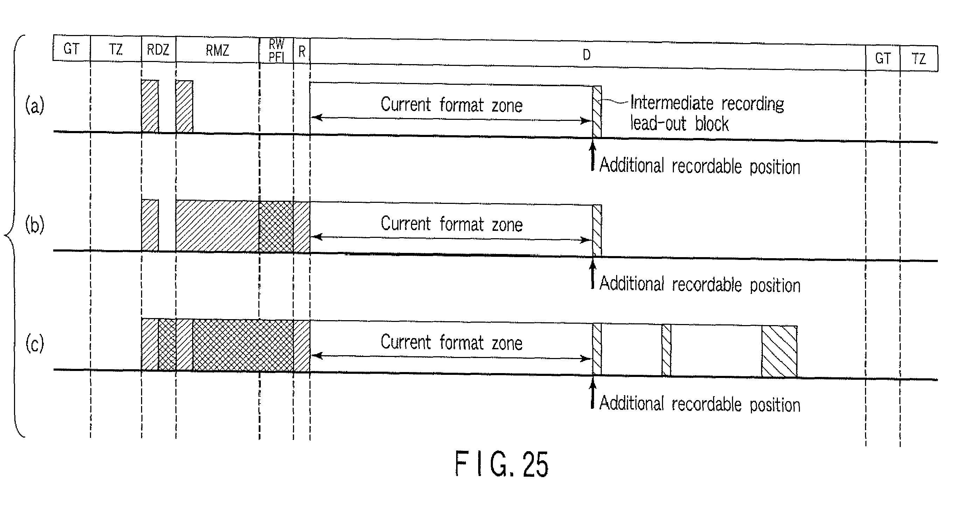

FIG. 25 ((a) in FIG. 25) shows an example of the intermediate recording state of the optical disc according to one embodiment of the invention. The intermediate state means the following state: the format zone is formed in the data area, intermediate recording state lead-out blocks are recorded at its lead-out position, and the format information recording zone of the recordable management area is unrecorded or no valid data (e.g., the last physical sector number of the format zone is 00h) is recorded even when the format information recording zone is recorded. At this time, the disc state of the latest RMD indicates 13h.

Note that the intermediate recording state lead-out blocks are data of 32 PS blocks whose area type indicates the lead-out management area attribute (10b). In the intermediate recording state, data such as user data or the like can be additionally recorded from the lead-out position of this format zone. At this time, the intermediate recording state lead-out blocks are overwritten. Upon completion of additional recording of data, intermediate recording state lead-out blocks are recorded again from that position. The intermediate recording state lead-out blocks are used to search for the lead-out position of the format zone.

FIG. 25 ((a) in FIG. 25) shows the intermediate recording state formed as a result of execution of additional recording or quick formatting from an unrecorded state. FIG. 25 ((a) and (c) in FIG. 25) shows the intermediate recording states formed as a result of execution of quick formatting to the already recorded disc. At this time, the erase data (e.g., the last physical sector number of the format zone is 00h) is recorded in the format information.

In any state, a current format zone extends from the head of the data area to the position before the intermediate recording state lead-out blocks closest to the inner periphery side. In FIG. 25 ((c) in FIG. 25), previously recorded data remains outside the current format zone, but this area is not considered as the current format zone. Data can be overwritten everywhere on the current format zone. In this state, data can be additionally recorded from the start physical sector of the intermediate recording lead-out blocks. Note that additional recording is that to be executed for contiguous addresses, and cannot be executed for discrete address positions.

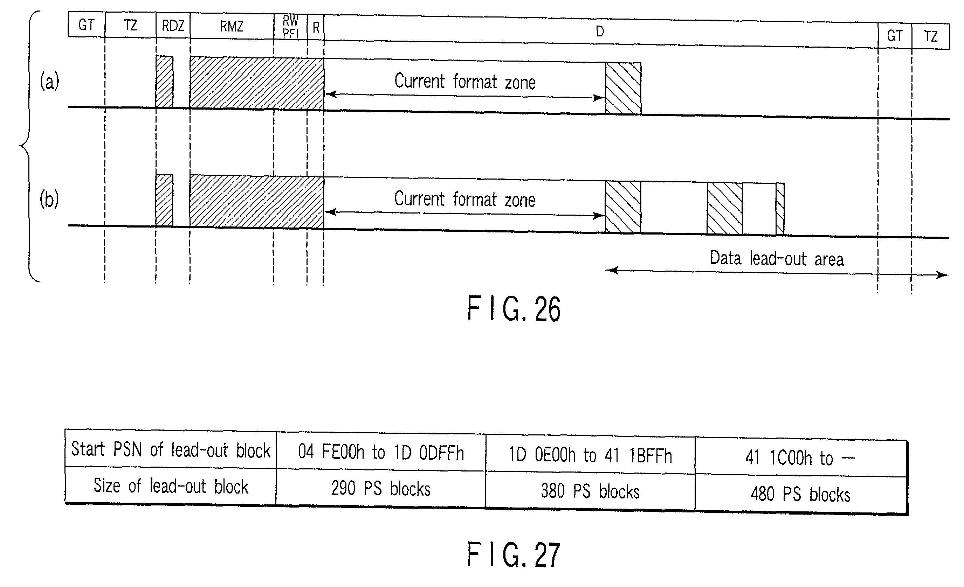

FIG. 26 shows an example of the complete recording state of the optical disc according to one embodiment of the invention. The complete recording state means the following state: the recording management zone is fully recorded, valid format information and reference code information are recorded, the contiguous format zone is formed from the inner periphery side of the data area, and lead-out blocks are formed at the lead-out position of the format zone. The lead-out blocks are data which have a size shown in FIG. 27 and the area type of which indicates the lead-out management area attribute (10b). The current format zone extends from the head of the data area to the position before the lead-out block closest to the inner periphery side. Data can be overwritten on the current format zone. However, an area from the lead-out block to the outermost periphery of the disc is considered as a management area, which cannot undergo additional recording of data.

Therefore, the format zone end physical sector number of the format information stores the end physical sector number of the correct format zone. In order to additionally record data on this zone, for example, quick extension formatting need be executed to restore the disc to the intermediate recording state, or extension formatting need be executed to extend the current format zone.

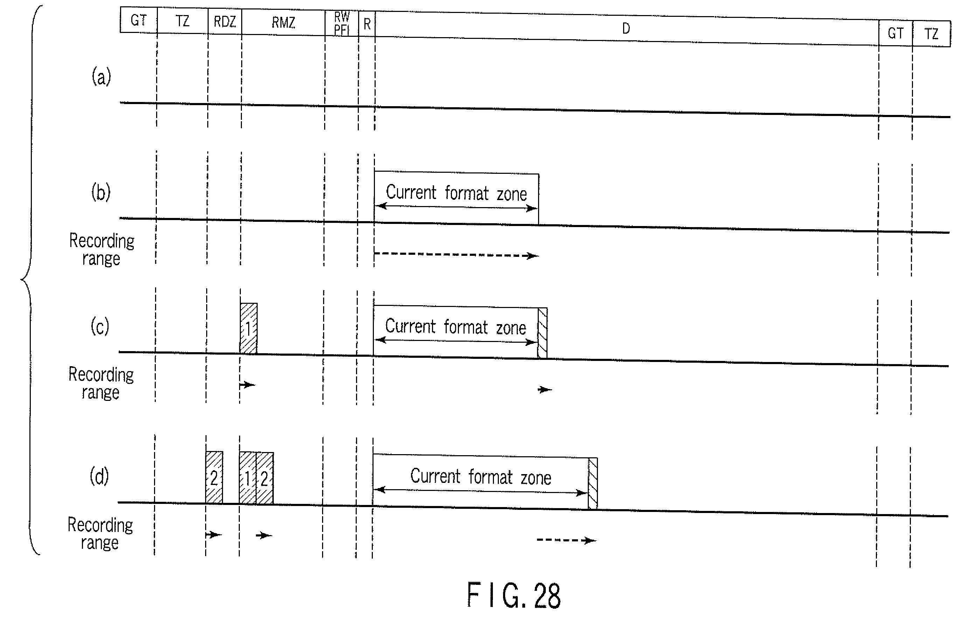

FIG. 28 ((a) to (c) in FIG. 28) shows the recording operation state on the disc in the empty state. Note that arrows and dotted lines indicate recording ranges in respective states. FIG. 28 ((a) in FIG. 28) shows an unrecorded disc. Since the optical disc of the invention does not require any formatting, user data can be additionally recorded on the unrecorded disc. FIG. 28 ((b) in FIG. 28) shows this state. If recording of user data is interrupted, intermediate recording state lead-out blocks are recorded at the lead-out position of the user data. As a result, the disc is set in the intermediate state.

In the intermediate recording state, data can be freely recorded at every address positions within the current format zone. If a given amount of user data is recorded, RMD is recorded in the recording management zone. At this time, the disc state is set to be 13h, and the current format zone start physical sector number and end physical sector number are updated. In this state, data can be overwritten everywhere within the format zone.

When user data is to be continuously additionally recorded, data is recorded from the lead-out position of the format zone, as shown in FIG. 28C ((c) in FIG. 28). At this time, the previous intermediate recording state lead-out blocks are erased by overwrite. Furthermore, upon completion of recording, intermediate recording state lead-out blocks are additionally recorded. When the optical disc apparatus goes to sleep or when a host issues a command for unloading the disc from the apparatus, the latest RMD in the recording management zone is copied to the recording management data copy zone.

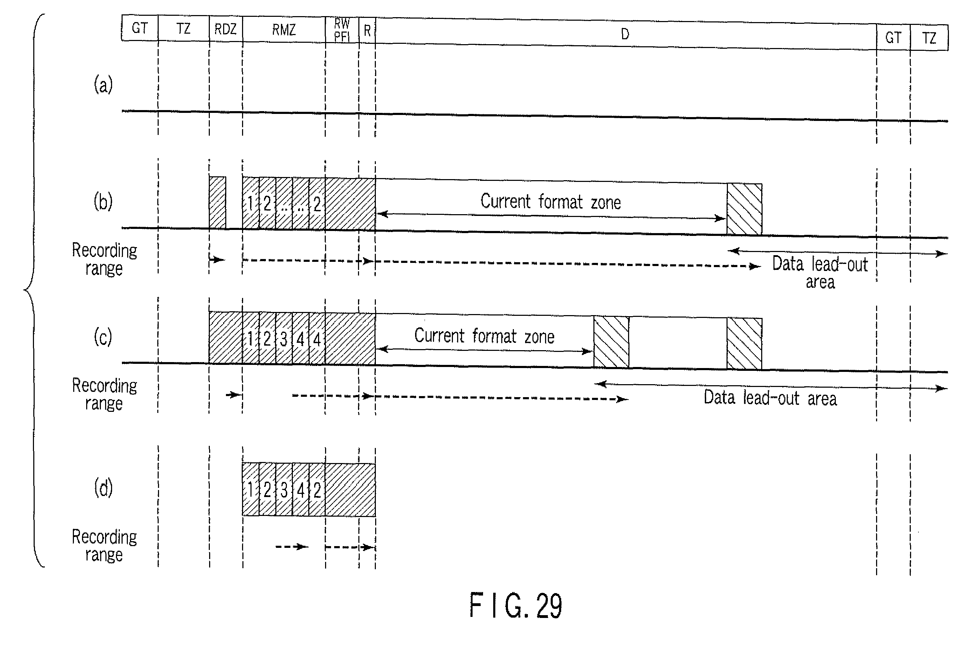

FIG. 29 shows the full format operation state to the disc in the empty state. Full formatting is a format operation for easing old user data, and setting the disc in the complete state. When a host issues a full format command, the optical disc apparatus records RMD on the recording management zone first. At this time, the disc state is 11h, and the format operation code is 01h. Recording information 1 and recording information 2 are updated according to the designated size of the format zone. Subsequently, data in which main data is 00h is recorded on the data area by the designated size, and upon completion of recording, lead-out blocks are recorded. Furthermore, format information and reference code information are recorded, and an unrecorded area of the recording management zone is padded with the latest RMD. The disc state of the latest RMD is 12h, and the format operation code is 00h. Also, the current format zone start physical sector number and end physical sector number are updated.

Also, flags assigned to the format information of the padding state information, reference code information, and recording management zone are changed to indicate the recording state (1b). Furthermore, the last physical sector number of the current format zone may be stored in the recordable maximum physical sector number of the update data area structure.

FIG. 29 ((b) in FIG. 29) shows this result. Although not shown, when formatting is interrupted in response to some command input from a host during formatting, data recording on the data area is interrupted, and intermediate recording state lead-out blocks are additionally recorded. In this case, no valid information is recorded in the format information. As a result, the disc is set in the intermediate recording state.

FIG. 29 ((c) in FIG. 29) shows the state formed when the disc in the state shown in FIG. 29 ((b) in FIG. 29) undergoes full formatting. In this case, the RMD whose disc state is 11h is recorded, thus starting the format operation. Note that the optical disc of the invention is characterized in that old RMD information is held since a normal full format operation does not erase or format the recording management zone. After recording of the RMD, data whose main data is 00h is sequentially recorded from the innermost periphery side of the data area. In this way, old user data is erased. Upon completion of recording up to the designated region, lead-out blocks are recorded. Then, the RMD and format information are updated.

In the optical disc of the invention, since old data of the RMD is not lost by full formatting and the RMD holds the padding state information, if it is confirmed that the recording management zone has undergone padding, only one latest RMD group need only be recorded, as shown in FIG. 29 ((d) in FIG. 29).

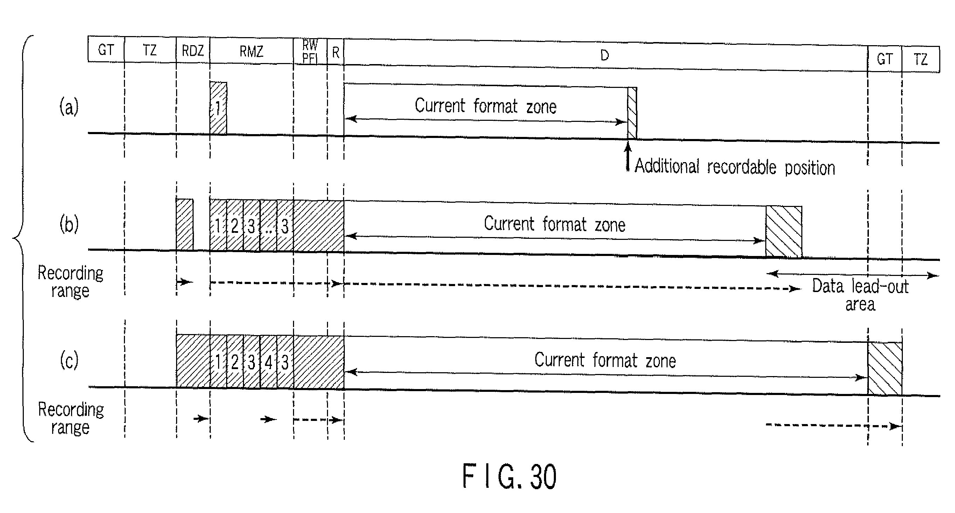

FIG. 30 shows the state of the extension format operation. Extension formatting is an operation for extending the size of the existing current format zone for the disc in the intermediate recording state or complete state, and setting the disc in the complete state. FIG. 30 ((a) in FIG. 30) shows the disc in the intermediate recording state. Upon reception of an extension format command from a host for this disc, the optical disc apparatus records RMD first. At this time, the disc state is 11h, and the format operation code is 02h. Furthermore, recording information 1 and recording information 2 are updated.

Subsequently, data whose main data is 00h is recorded by the designated size in turn from the first physical sector of the intermediate recording state lead-out blocks of the current format zone in the state shown in FIG. 30 ((a) in FIG. 30), and lead-out blocks are recorded after that data. The format information and reference code information are updated, and the management zone is padded with the latest RMD. At this time, the disc state of the latest RMD is 12h. The format operation code is set to be 00h, and the current format zone start physical sector number and end physical sector number are updated. Also, flags assigned to the format information of the padding state information, reference code information, and recording management zone are changed to indicate the recording state (1b). FIG. 30 ((b) in FIG. 30) shows this state. In this way, with extension formatting, the current format zone can be extended while the current format zone on which existing user data is recorded is held. Upon further extending the current format zone, extension formatting can be applied again, as shown in FIG. 30 ((c) in FIG. 30).

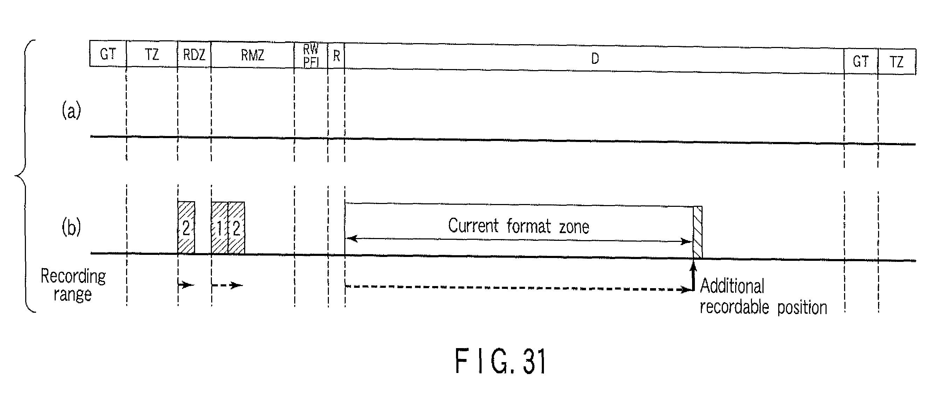

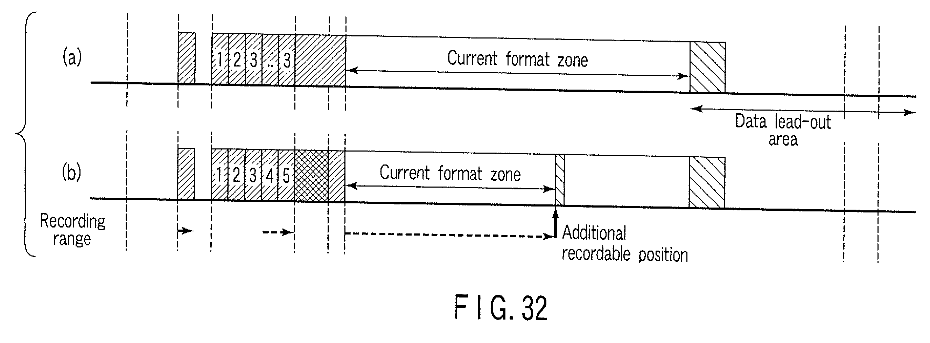

FIGS. 31 and 32 show the state of a quick format operation. FIG. 31 ((a) in FIG. 31) shows an unrecorded disc. Upon reception of a quick format command from a host for this disc, the optical disc apparatus records RMD first. At this time, the disc state is 11h. Also, the format operation code is 05h. Furthermore, recording information 1 and recording information 2 are updated. Next, data whose main data is 00h is recorded in turn from the innermost periphery of the data area. Upon completion of recording of the designated size, intermediate recording lead-out blocks are recorded, and RMD is recorded again. In this case, the disc state of the latest RMD is 13h. The format operation is 00h, and the current format zone start physical sector number and last physical sector number are updated. FIG. 31 ((b) in FIG. 31) shows this state.

FIG. 32 ((a) in FIG. 32) shows the disc in the complete state. Upon reception of a quick format command from a host for this disc, the optical disc apparatus records RMD first. At this time, the disc state is 11h. Also, the format operation code is 05h. Furthermore, recording information 1 and recording information 2 are updated. When it is confirmed that the previous state is the complete state, or when the format information of the padding state is 1b, since some information is recorded on the format information recording zone, the format information is updated. Next, data whose main data is 00h is recorded in turn from the innermost periphery of the data area. Upon completion of recording of the designated size, intermediate recording lead-out blocks are recorded, and RMD is recorded again. In this case, the disc state of the latest RMD is 13h. The format operation is 00h, and the current format zone start physical sector number and last physical sector number are updated. FIG. 32 ((b) in FIG. 32) shows this state.

As described above, in the quick format operation according to the embodiment of the invention, the format information is not reset for the disc in the empty state or intermediate recording state. However, if the previous state is the complete state, that format information is erased. Therefore, as a result of this formatting, the information on the recording management zone is held, but the format information is overwritten by invalid data. When a disc in the intermediate recording state is loaded into a player, the player can be avoided from erroneously recognizing the disc as the complete state according to the old format information, and causing operation errors.

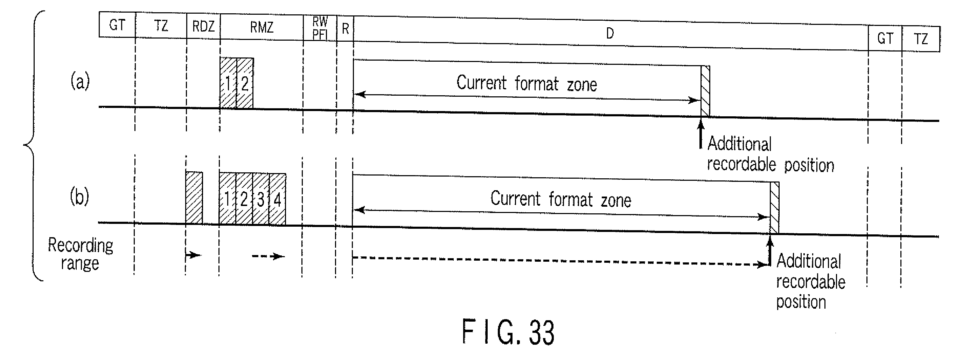

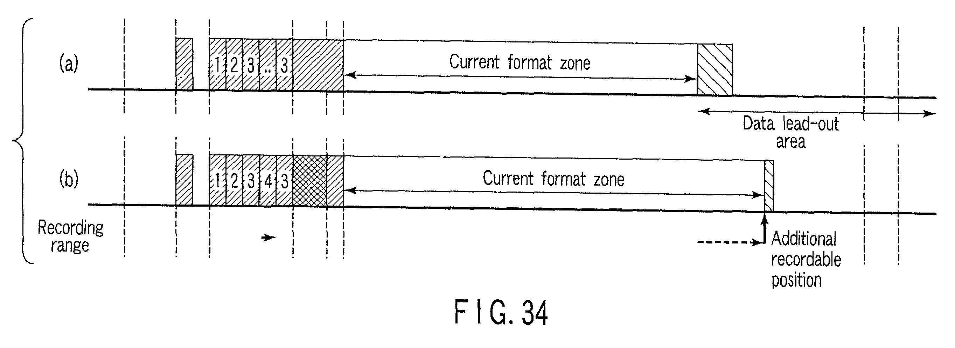

FIGS. 33 and 34 show the state of quick extension formatting. FIG. 33 ((a) in FIG. 33) shows the disc in the intermediate recording state. Upon reception of a quick extension format command from a host for this disc, the optical disc apparatus records RMD first. At this time, the disc state is 11h. Also, the format operation code is 05h. Next, data whose main data is 00h is recorded in turn from the first physical sector of the intermediate recording lead-out blocks. Upon completion of recording of the designated size, intermediate recording lead-out blocks are recorded, and RMD is recorded again. In this case, the disc state of the latest RMD is 13h. The format operation is 00h, and the current format zone start physical sector number and last physical sector number are updated. FIG. 33 ((b) in FIG. 33) shows this state.

FIG. 34 ((a) in FIG. 34) shows the disc in the complete state. Upon reception of a quick extension format command from a host for this disc, the optical disc apparatus records RMD first. At this time, the disc state is 11h. Also, the format operation code is 05h. Furthermore, since the original state is the complete state, the format information is updated. Next, data whose main data is 00h is recorded in turn from the first physical sector of the intermediate recording lead-out blocks. Upon completion of recording of the designated size, intermediate recording lead-out blocks are recorded, and RMD is recorded again. In this case, the disc state of the latest RMD is 13h. The format operation is 00h, and the current format zone start physical sector number and last physical sector number are updated. FIG. 34 ((b) in FIG. 34) shows this state.

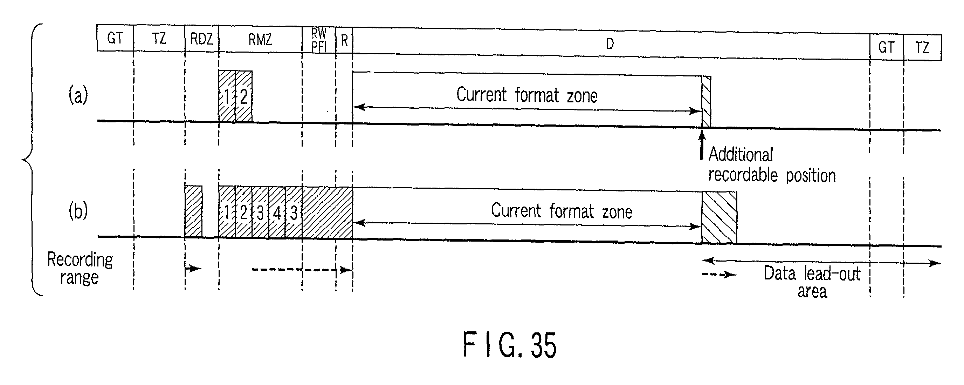

FIG. 35 shows the state of the close operation. FIG. 35 ((a) in FIG. 35) shows the disc in the intermediate recording state. Upon reception of a close command from a host for this disc, the optical disc apparatus records RMD first. At this time, the disc state is 11h. Also, the format operation code is 06h. Subsequently, data with the lead-out management area attribute (10b) is additionally recorded in the intermediate recording lead-out blocks, thus generating lead-out blocks. Furthermore, format information and reference code information are recorded, and an unrecorded part of the recording management zone is padded with the latest RMD. Note that the disc state of the latest RMD is 12h. Also, the format operation code is 00h. FIG. 35 ((b) in FIG. 35) shows this state.

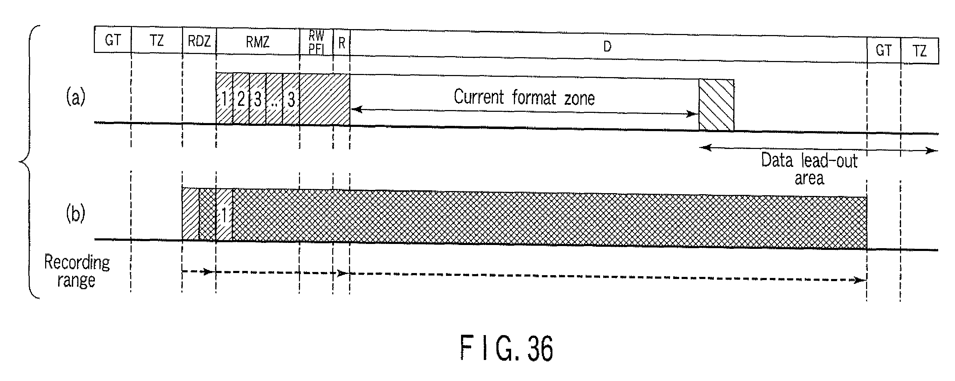

FIG. 36 shows the state of the complete erase format operation. FIG. 36 ((a) in FIG. 36) shows the disc in the complete state. Upon reception of a complete erase format command from a host for this disc, the optical disc apparatus records RMD first. At this time, the disc state is 11h. Also, the format operation code is 08h. Next, erase data is recorded in turn from the format information to the outermost periphery of the data area. After that, valid RMD is recorded in the first non-defective RMD group in the recording management zone, and the remaining zone is padded with the erase data or latest RMD.

Furthermore, valid RMD is similarly recorded in the first non-defective RMD group in the recording management data copy zone, and the remaining zone is padded with the erase data or latest RMD. At this time, the disc state of the latest RMD is 00h. Also, the erase operation counter is incremented by one. FIG. 36 ((b) in FIG. 36) shows this state.

As described above, on the optical disc of the invention, information is erased using the erase data in place of DC erase. For example, when this formatting is used for a multi-layer disc, a problem of inter-layer crosstalk due to the difference between recorded and unrecorded areas can be solved. Also, since the optical disc of the invention allows to record such erase data on its entire surface, data that the user wants to erase can be physically erased, thus providing an optical disc with high security.

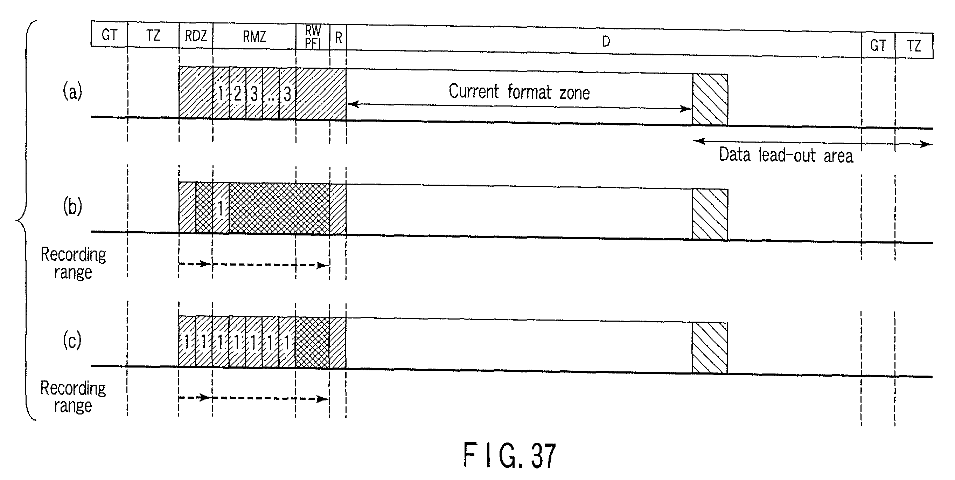

FIG. 37 shows the state of management zone erase formatting. FIG. 37 ((a) in FIG. 37) shows the disc in the complete state. Upon reception of a management zone erase format command from a host for this disc, the optical disc apparatus records RMD in the first valid RMD group in the recording management zone. At this time, the disc state is 11h. Also, the format operation code is 07h. Next, erase data is recorded from the next RMD group to the last physical sector of the format information or the reference code information. After that, valid RMD is overwritten on the first non-defective RMD group in the recording management zone. Furthermore, the latest RMD is similarly recorded in the first non-defective RMD group in the recording management data copy zone, and the remaining zone is padded with the erase data or the latest RMD. At this time, the disc state of the latest RMD is 00h. The erase operation counter is incremented by one. FIG. 36 ((b) in FIG. 36) shows this state.

As another erase method, for example, identical erase RMD may be recorded on all the RMD in the recording management data copy zone and recording management zone. FIG. 36 ((c) in FIG. 36) shows this state. At this time, the update counter of the RMD is 0 or 1.

As another embodiment of management zone erase formatting, the following method is available. Upon reception of a management zone erase format command from a host for this disc, the optical disc apparatus records RMD on all or some RMD of the already used part in the recording management data copy zone. At this time, the disc state is 11h.

Also, the format operation code is 07h. Next, erase data is recorded from the next RMD group to the last physical sector of the format information or the reference code information. After that, RMD is recorded again in the first valid RMD group in the recording management zone and the recording management data copy zone. The disc state of this RMD is 00h.

In this way, since the management information alone can be erased on the optical disc of the invention, even when an error has occurred in the management information due to defects or the like, the disc can be re-formatted quickly.

Subsequently, the use method of the maximum formatted zone last physical sector number in the RMD according to one embodiment of the invention will be described below.

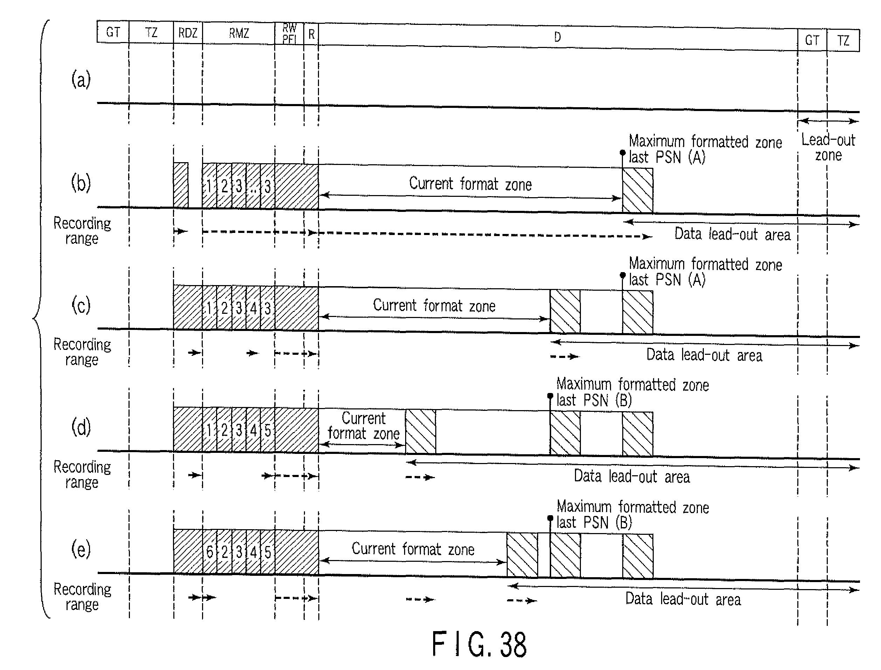

FIG. 38 shows the state of the full format operation. FIG. 38 ((a) in FIG. 38) shows an unrecorded disc. When full formatting is applied to this disc, the disc has the state shown in FIG. 38 ((b) in FIG. 38). Note that the maximum formatted zone last physical sector number stores (A) as the last physical sector of the current format zone. FIG. 38 ((c) in FIG. 38) shows a case wherein full formatting for a size smaller than the previous size is further applied to this disc. In this case, the current format zone is reduced in size according to the designated size. However, the maximum formatted zone last physical sector number holds the previous state intact.

FIG. 38 ((d) in FIG. 38) shows a case wherein full formatting for a size still smaller than the previous size is further applied to this disc. In this case, the maximum formatted zone last physical sector number is shifted to (B) as the last physical sector number of the previous format zone.

FIG. 38 ((e) in FIG. 38) shows a case wherein full formatting for a size larger than the previous size is applied to this disc. If the designated size is located inside (B), the optical disc apparatus overwrites the lead-out blocks in the state shown in FIG. 38 ((b) in FIG. 38) with data whose area type is the data area attribute, and records lead-out blocks from the physical sector next to the designated size. That is, this method has the following merit: data recording for formatting can be skipped for a part on which data with the data area attribute has already been recorded.

Although not shown, upon execution of full formatting for a size larger than the position (B) from the state shown in FIG. 38 ((b) in FIG. 38), the optical disc apparatus overwrites the lead-out blocks in the state shown in FIG. 38 ((b) in FIG. 38) with data whose area type is the data area attribute, and records data whose main data is 00h from the position (B) to the designated size.

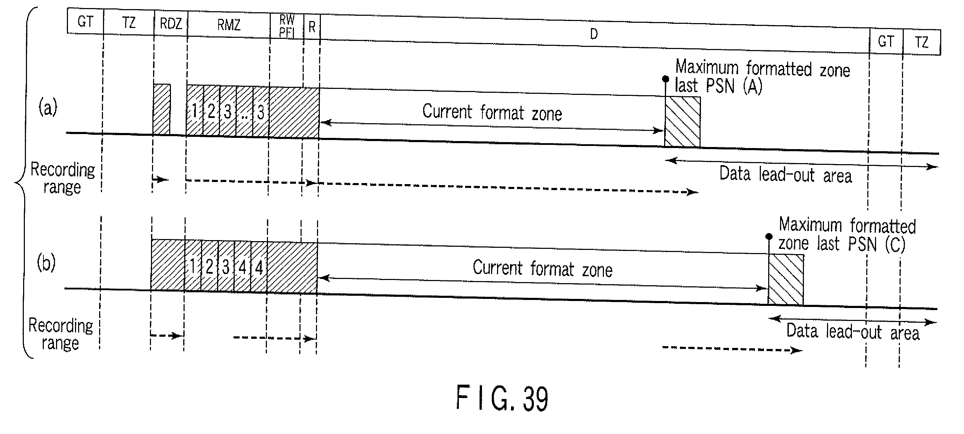

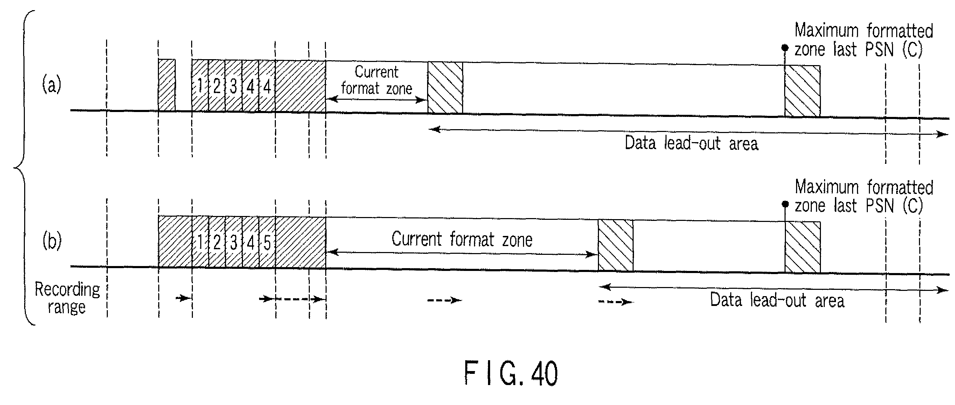

FIGS. 39 and 40 show the state of the extension format operation. FIG. 39 ((a) in FIG. 39) shows the disc in the complete state. Upon applying the extension format operation to this disc, the current format zone is extended, and the maximum formatted zone last physical sector number changes, as shown in FIG. 39 ((b) in FIG. 39).

FIG. 40 ((a) in FIG. 40) shows the state wherein the maximum formatted zone last physical sector number is located at a position separate away from the current format zone. Upon applying the extension format operation to this disc, the optical disc apparatus overwrites lead-out blocks with data whose area type is the data area attribute, and further records lead-out blocks from the physical sector next to the designated size.

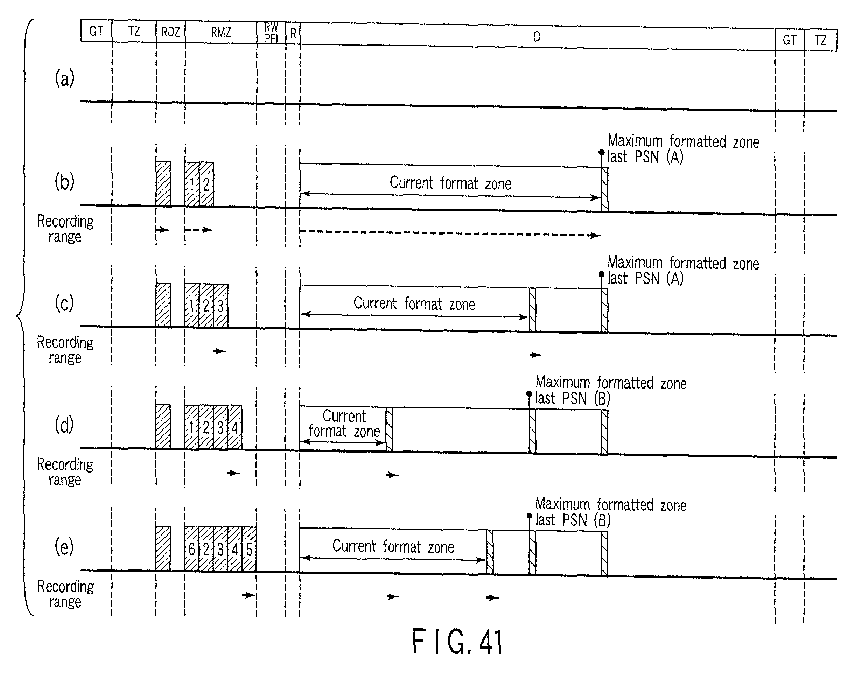

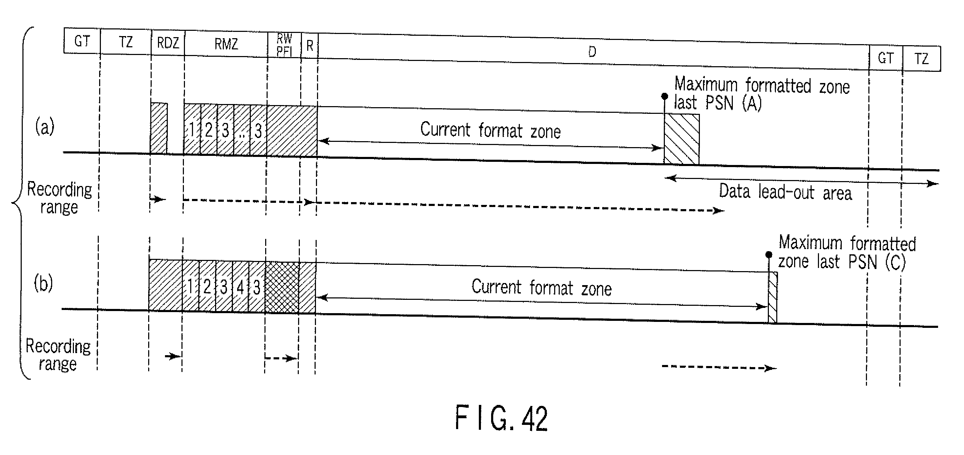

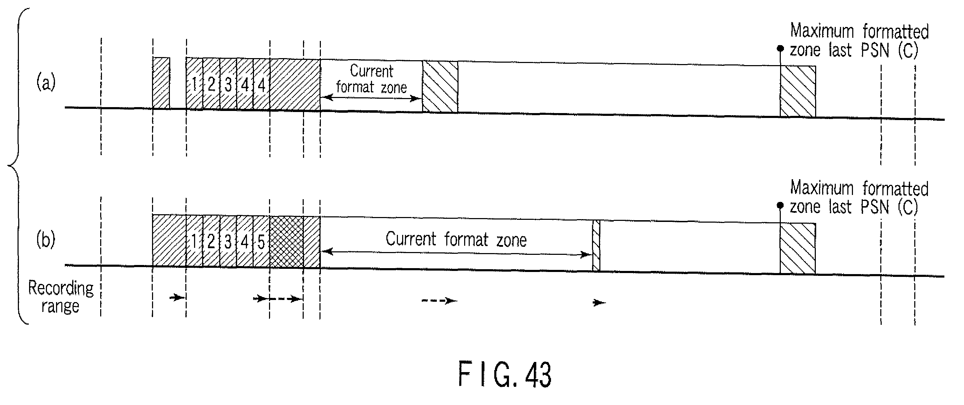

FIG. 41 shows the state of the quick format operation, and FIGS. 42 and 43 show that of the quick extension format operation. In this case, recording of some format data can be omitted as in full formatting and the like.

As described above, the maximum formatted zone last physical sector number of the invention is set at a physical sector immediately before that whose area type is the lead-out management area attribute after the lead-out block of the current format zone. Using this information, since an actual recording range on the disc can be reduced, the formatting time can be shortened. Although not shown, as for full formatting and quick formatting, several ten or several hundred PS blocks at the head of the data area may always be overwritten in addition to the lead-out blocks. In this way, the header information of the file system recorded on the data area can be erased.

Another embodiment of the use method of the maximum formatted zone last physical sector number according to the invention will be described below.

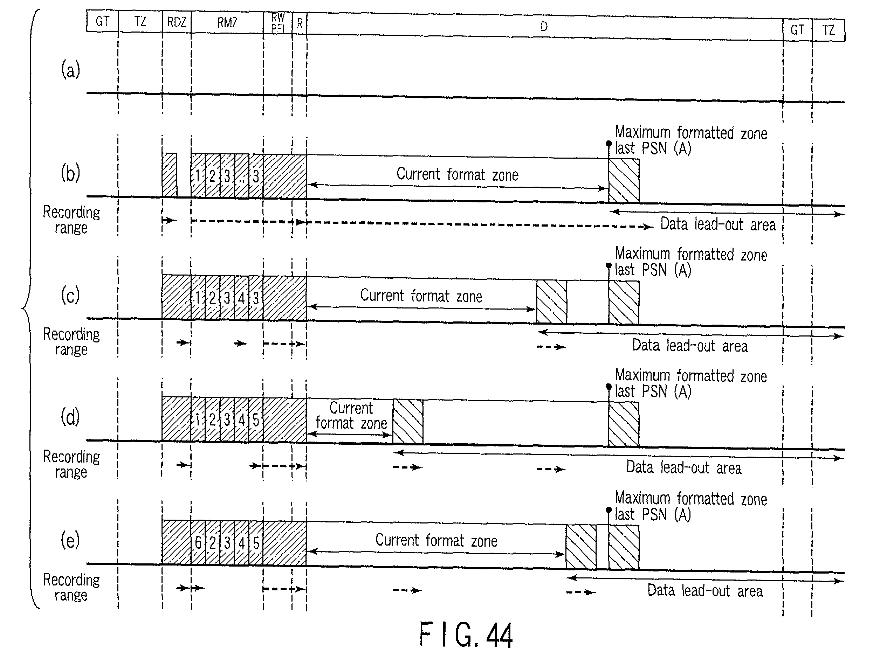

FIG. 44 shows the state of the full format operation. This embodiment adds the following operation. That is, upon executing re-formatting from the state shown in FIG. 44 ((c) in FIG. 44), i.e., the state wherein the current format zone is located inside the maximum formatted zone last physical sector number (A), to a still smaller state, the lead-out blocks or the intermediate recording lead-out blocks in the state shown in FIG. 44 ((c) in FIG. 44) are overwritten with data whose area type is the data area attribute. As a result, even upon executing full formatting with a smaller size, the maximum formatted zone last physical sector number can be prevented from being reduced.

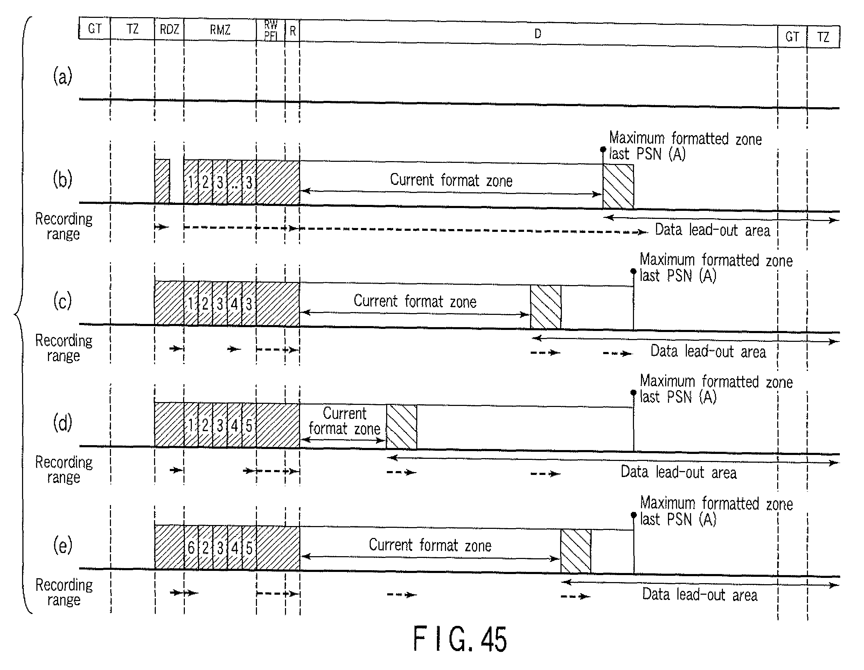

FIG. 45 shows the state of the full format operation. This embodiment adds the following operation. That is, upon applying full formatting for a smaller size to the existing current format zone, the previous lead-out blocks or intermediate recording lead-out blocks are overwritten with data whose area type is the data area attribute. As a result, even upon execution full formatting for a smaller size a plurality of number of times, the maximum formatted zone last physical sector number can be prevented from being reduced.

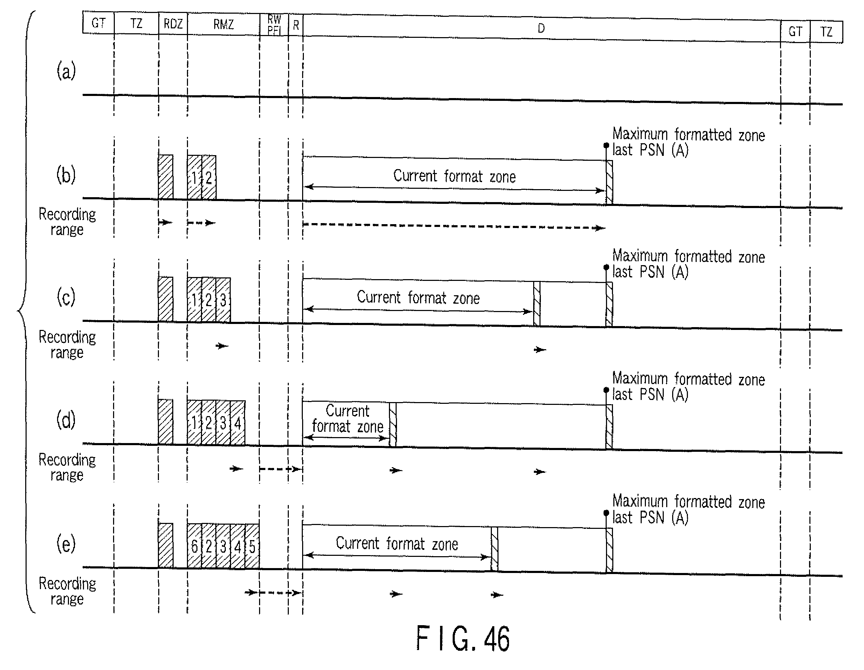

FIG. 46 shows the state of the quick format operation. This embodiment adds the following operation. That is, upon applying re-formatting from a state wherein the current format zone is located inside the maximum formatted zone last physical sector (A) to a further smaller state, the lead-out blocks in the state shown in FIG. 44 ((c) in FIG. 44) or intermediate recording lead-out blocks are overwritten with data whose area type is the data area attribute as in FIG. 44. As a result, even upon execution of quick formatting for a smaller size, the maximum formatted zone last physical sector number can be prevented from being reduced.

The formatted zone information stored in the RMD is reset by management zone erase formatting or complete erase formatting.

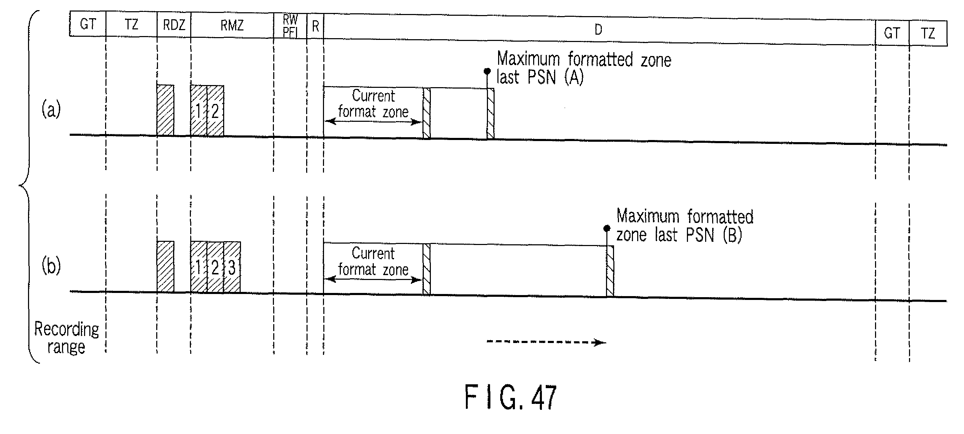

FIG. 47 is a view for explaining another use method of the maximum formatted zone last physical sector number.

With the method shown in FIG. 47, the optical disc apparatus normally records user data on the current format zone in response to a command from a host. During an idle time period without any command input from the host, the optical disc apparatus records dummy data in a zone other than the format zone of the disc to extend the format zone. The apparatus stores the result in the maximum formatted zone last physical sector number of the RMD. In this way, upon reception of the next format command from the host, formatting is completed by only recording lead-out blocks after the command, and the format time can be shortened when viewed from the user.

An optical disc having two information recording layers according to one embodiment of the invention will be described below.

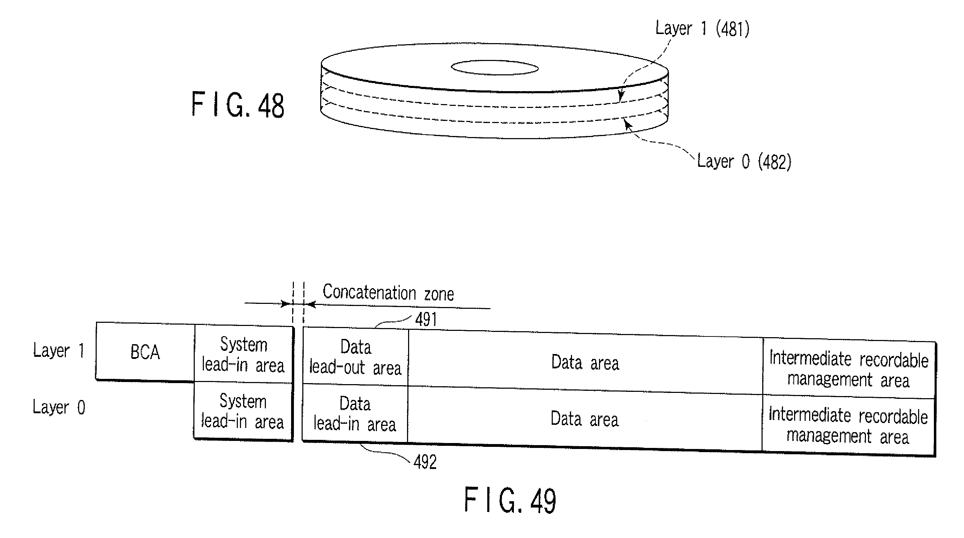

FIG. 48 shows an optical disc having two information recording layers.

FIG. 49 shows the layout of the information recording layer. A BCA is allocated on the innermost periphery side of layer 1, and a system lead-in area, recordable management area, data area, and another recordable management area are allocated in this order. Addresses are assigned while being incremented in the order of a lead-in recordable management area (data lead-in area), data area of ?layer (layer 0)?, intermediate recordable management area, data area of layer 1, and lead-out recordable management area (data lead-out area).

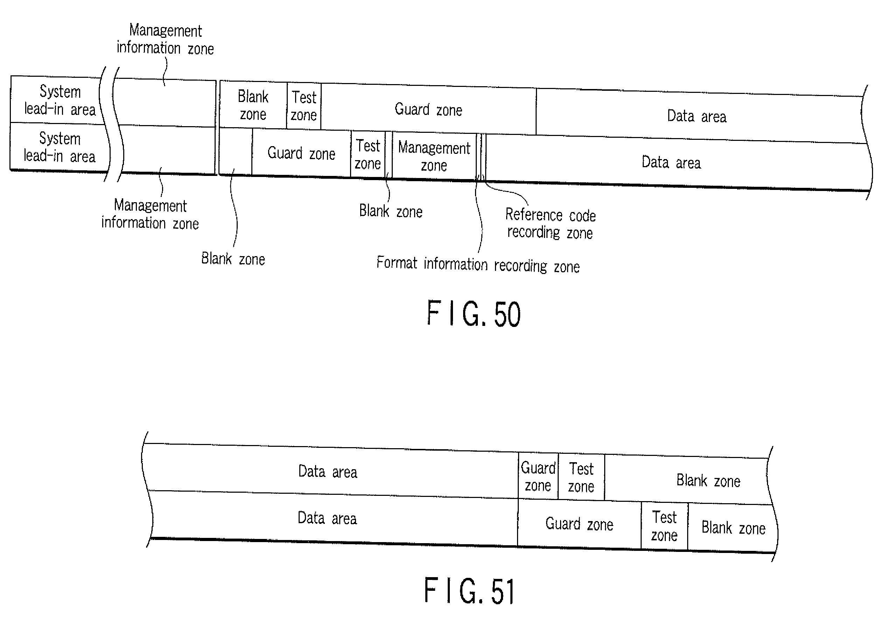

FIG. 50 shows the detailed layout on the inner periphery side, and FIG. 51 shows that on the outer periphery side. In case of a dual-layer disc, in order to avoid the influence of the recording state of the other layer as much as possible, guard zones are allocated in an opposite layer in correspondence with a test zone and management zone.

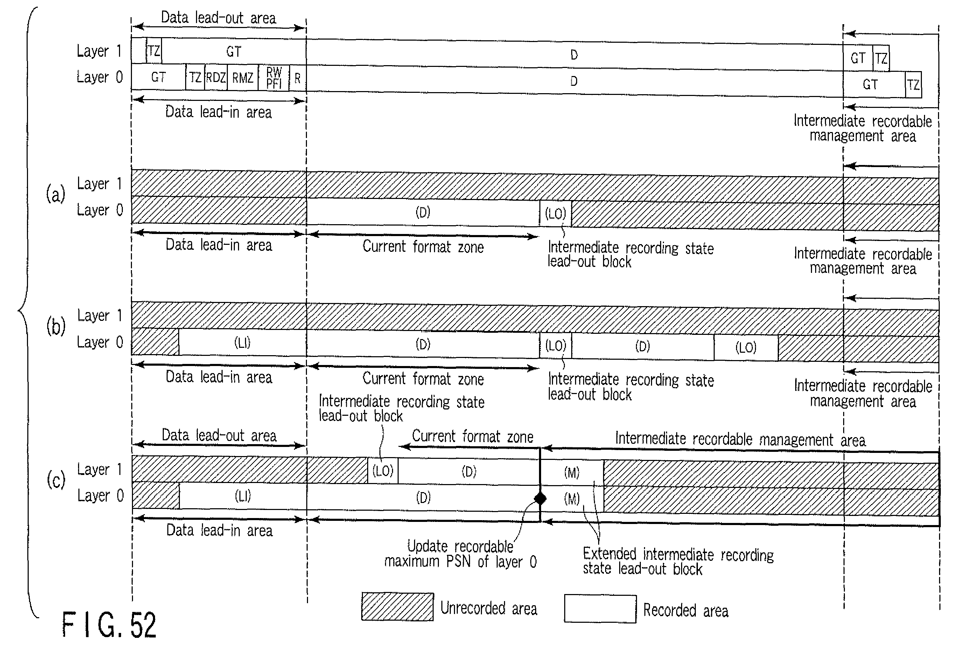

FIG. 52 shows the intermediate recording state of the dual-layer disc. Round brackets in FIG. 52 indicate the attributes of area types: (LI) represents a lead-in recordable management area attribute; (D), a data area attribute; (M), an intermediate recordable management area attribute; and (LO), a lead-out recordable management area attribute. In case of the dual-layer disc as well, a range sandwiched between the lead-in recordable management area and intermediate recording state lead-out blocks becomes a current format zone in the intermediate recording state. However, intermediate management area blocks are recorded in a portion where the format zone extends from layer 0 to layer 1. When the value of the recordable maximum physical sector number (PSN) of layer 0 stored in the RMD is changed by the extension operation of an intermediate recordable management area (to be described later), extended intermediate management area blocks are recorded, as shown in FIG. 52 ((c) in FIG. 52). The disc can transit to the intermediate recording state by performing recording on an unrecorded disc, quick formatting, or quick extension formatting.

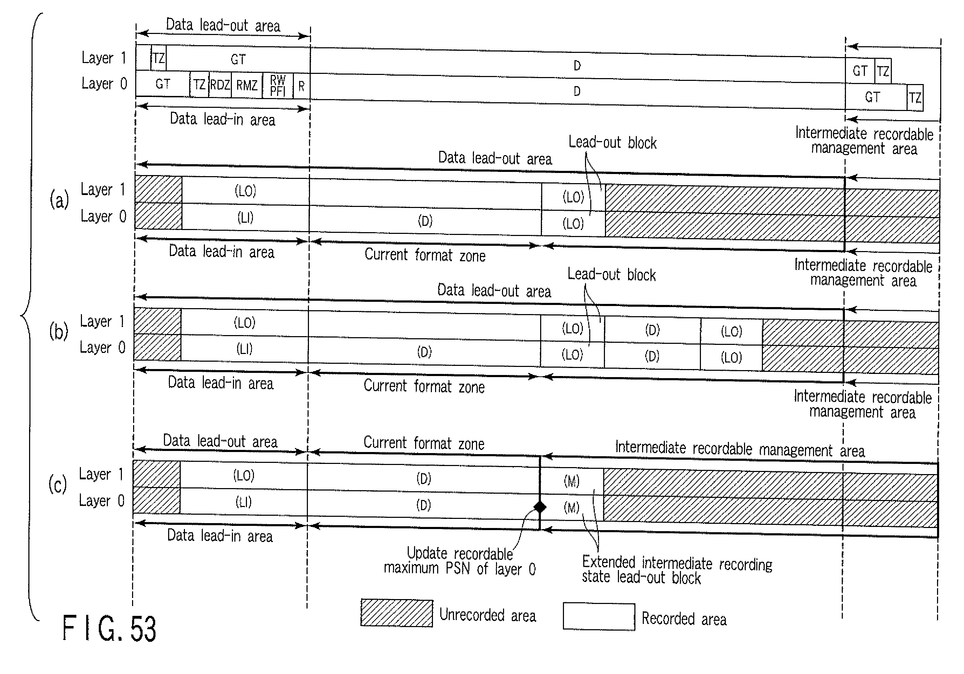

FIG. 53 shows the complete state of the dual-layer disc. In the dual-layer disc, a zone sandwiched between the lead-in recordable management area (data lead-in area) and lead-out blocks or lead-out recordable management area (data lead-out area) becomes a current format zone in the complete state. However, as shown in FIG. 53 ((a) in FIG. 53), when the current format zone terminates in layer 0, lead-out blocks have to be recorded in layer 0 and also in layer 1. In addition, a zone between the lead-out blocks on the outer periphery side of layer 1 and the existing lead-out recordable management area (data lead-out area) need be padded with some recording data such as dummy data or the like.

At this time, if a given area is sandwiched between data whose area type is the lead-out recordable management area attribute, the optical disc apparatus of the invention has a function of determining that the zone of interest is a dummy zone based on the attribute information before and after that zone. Therefore, that area of layer 1 may have any attribute. As shown in FIG. 53 ((b) in FIG. 53), a zone on the outer periphery side of the lead-out blocks is not included in the current format zone.

FIG. 53 ((c) in FIG. 53) shows a case wherein the current format zone extends between layer 0 and layer 1. In this case, extended intermediate management area blocks or intermediate management area blocks are allocated between layer 0 and layer 1.

When the intermediate recordable management area is extended, as shown in FIG. 53 ((c) in FIG. 53), the update recordable maximum physical sector number (PSN) of layer 0 in the RMD and the format zone last physical sector number (PSN) of layer 0 in the format information are changed. The disc can transit to the complete state by executing full formatting, full extension formatting, and the close operation for the disc in the intermediate state.

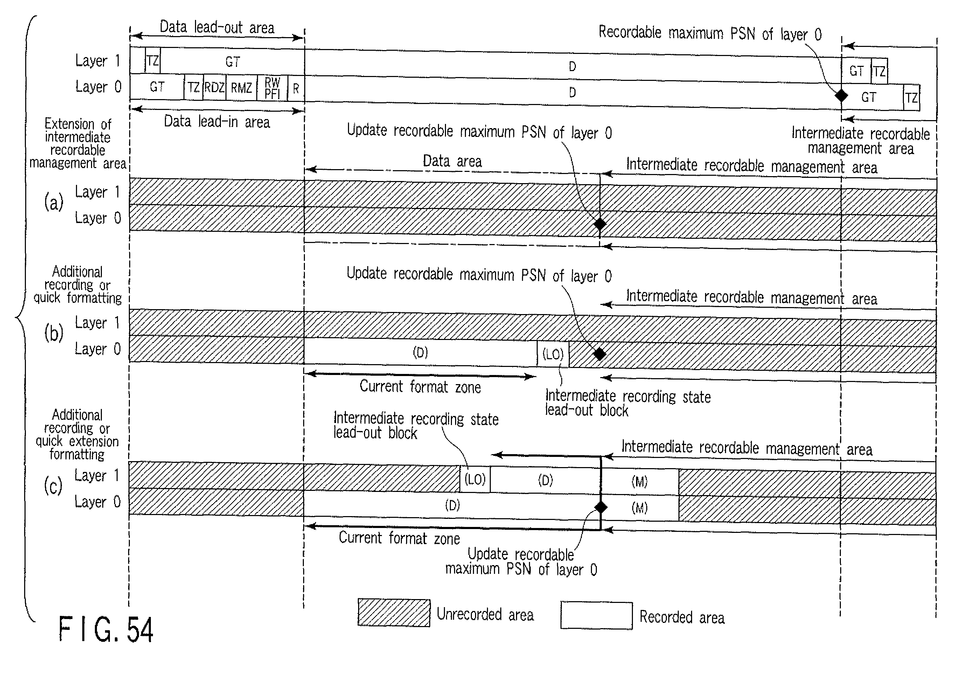

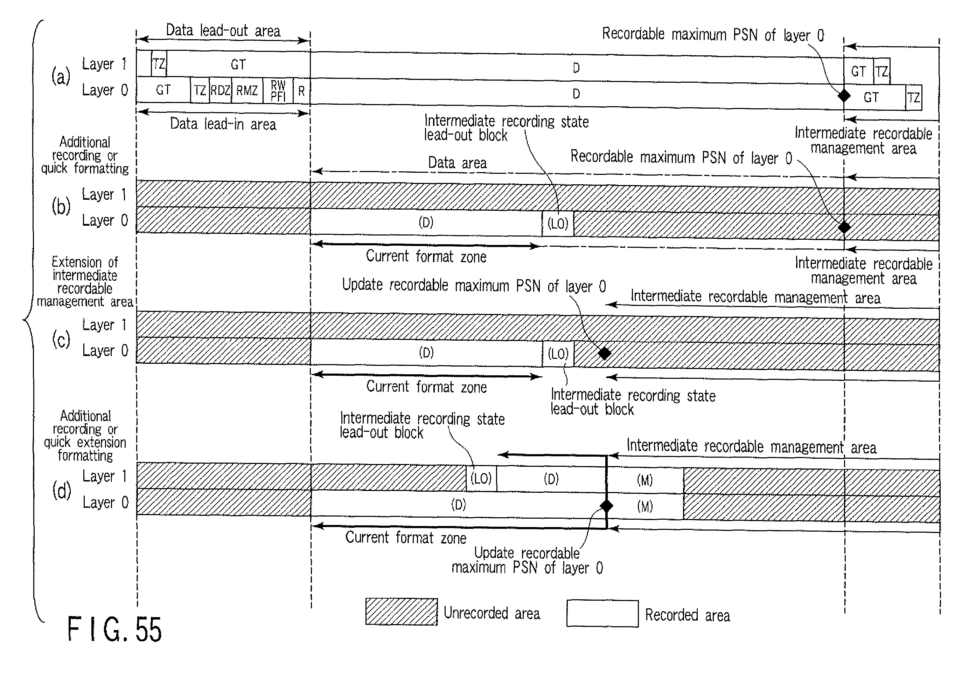

FIGS. 54 and 55 show the extension operation of the intermediate recordable area.

Upon reception of an intermediate recordable area extension command from a host, the optical disc apparatus changes the update recordable maximum physical sector number (PSN) of layer 0 in the data recording structure of the RMD. As a result, as shown in FIG. 54 ((a) in FIG. 54), the size of the data area can be changed. When data is to be continuously recorded, the data transits from layer 0 to layer 1 at the update recordable maximum physical sector number (PSN) of layer 0, as shown in FIG. 54 ((c) in FIG. 54). At this time, extended intermediate management area blocks are further recorded.

Normally, upon execution of the operation such as quick formatting, full formatting, or the like, the update recordable maximum physical sector number (PSN) of layer 0 is reset to a default value. However, since the optical disc of the invention stores previous management information, the update recordable maximum physical sector number (PSN) of layer 0 can be held even after formatting.

FIG. 55 shows extension of the intermediate recordable management area after data recording. When the current format zone falls within layer 0, the update recordable maximum physical sector number (PSN) of layer 0 can be changed within the range that does not interfere with the current format zone. The optical disc of the invention can adjust the data area to a needed size by adjusting the intermediate recordable management area. When user data is small, recording data such as dummy data or the like in the complete state can be deleted.

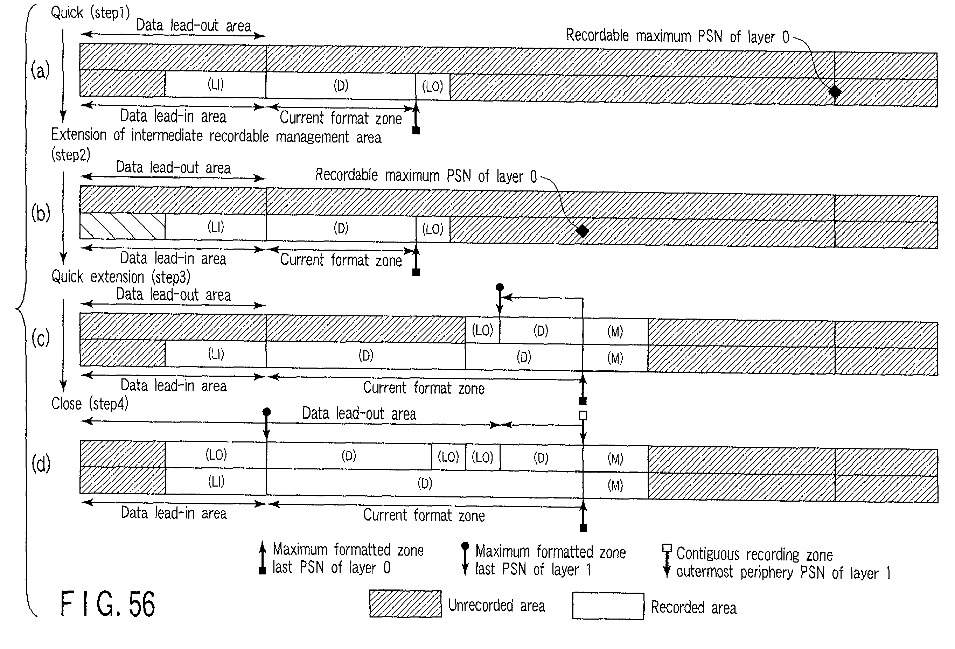

FIG. 56 shows the storage order of the maximum formatted zone last physical sector numbers of layers 0 and 1, and the contiguous recording zone outermost periphery physical sector number of layer 1.

As shown in FIG. 56 ((a) in FIG. 56), the maximum formatted zone last physical sector number of layer 0 stores the outermost periphery physical sector number of the current format zone. As shown in FIG. 56 ((c) in FIG. 56), when the current format zone transits to layer 1, the maximum formatted zone last physical sector number of layer 1 is stored in turn. If there is no recording layer on layer 1, this number stores "0" data. This value is reset when the intermediate recordable management area is newly extended.

FIG. 56 ((d) in FIG. 56) shows the complete state. At this time, since data are contiguously recorded from the head of the format zone to the lead-out recordable area on layer 1, the physical sector number of the head of the format zone is stored in the contiguous recording zone outermost periphery physical sector number of layer 1. The contiguous recording zone outermost periphery physical sector number is stored in response to the close operation, and is not reset when the intermediate recordable management area is extended.

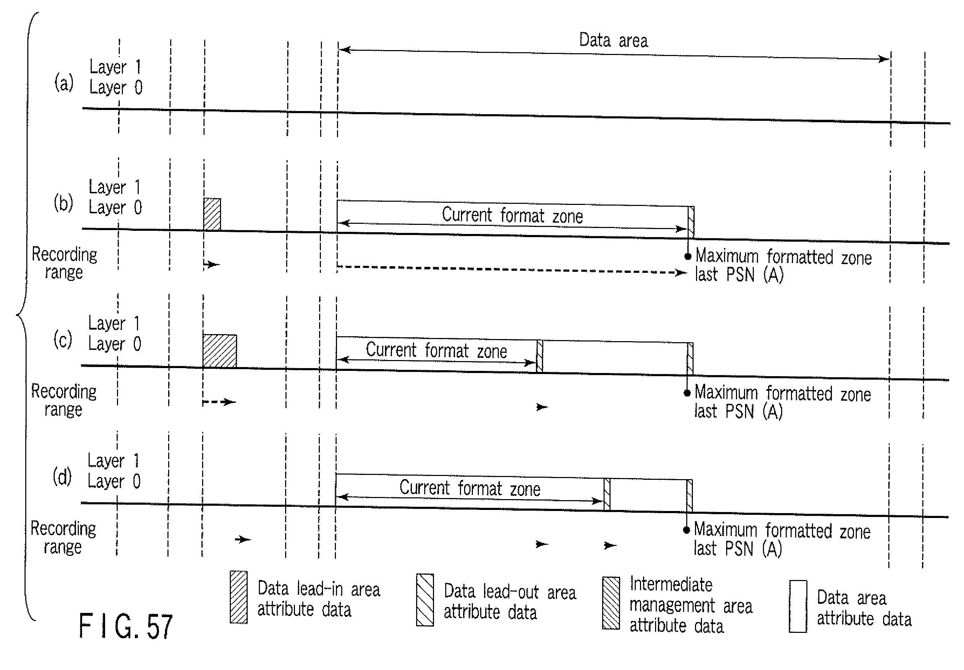

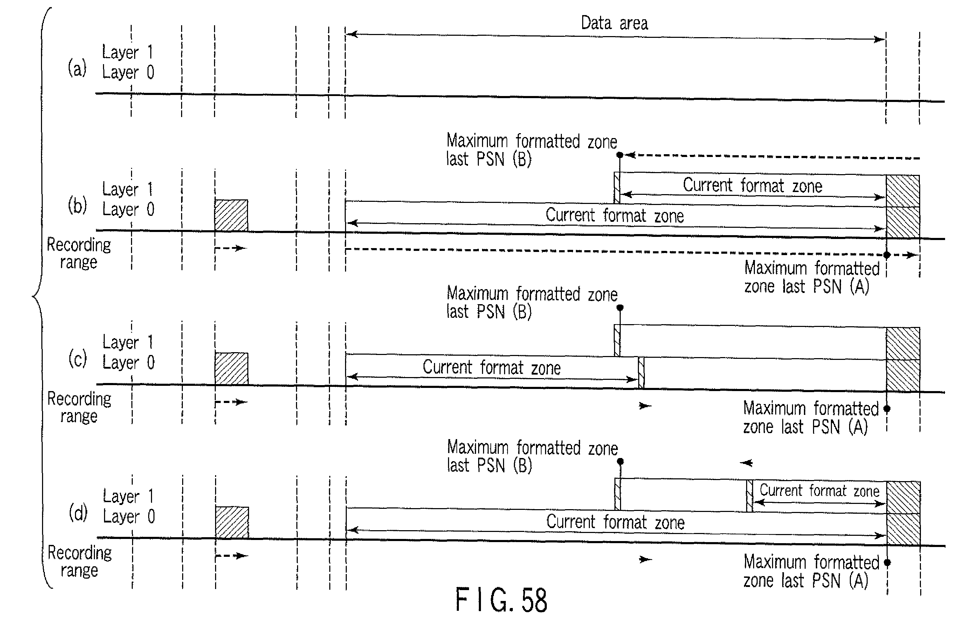

FIGS. 57 and 58 show the use method of the maximum format zone last physical sector.

The operation of layer 0 shown in FIG. 57 is the same as that of a single-layer disc. FIG. 58 shows the state wherein the maximum formatted zone last physical sector number of layer 1 is stored. In this case as well, if the current format zone and formatted zone of layer 0 and layer 1 are considered as a contiguous zone, the operation is the same as that of the single-layer disc.

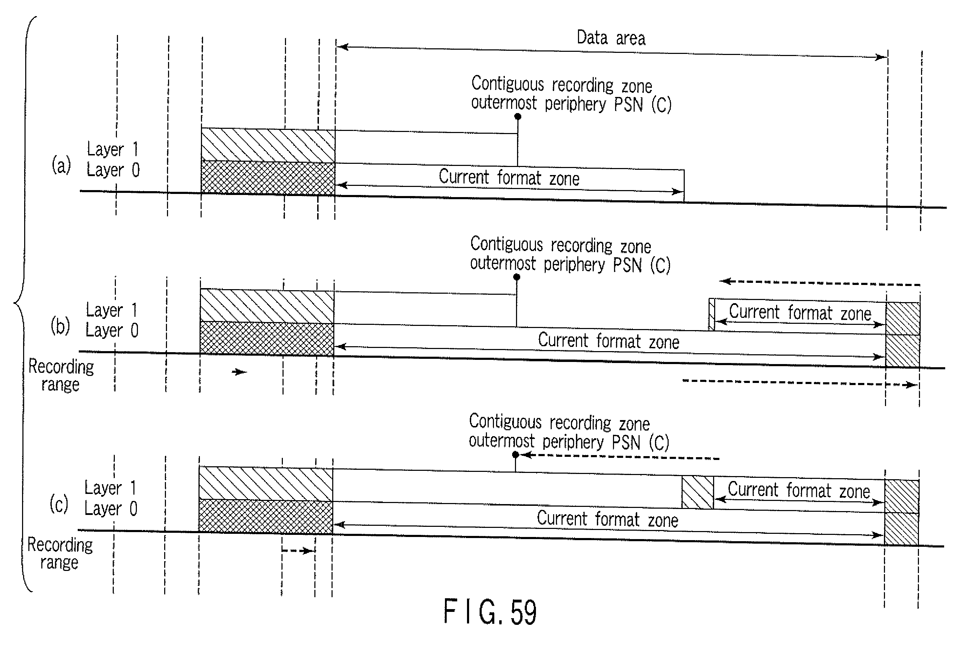

FIG. 59 shows recording in a state wherein the contiguous recording zone outermost periphery physical sector number of stored.

As shown in FIG. 59 ((a) in FIG. 59), when the contiguous recording zone outermost periphery physical sector number is stored, and the disc is to transit from FIG. 59 ((b) in FIG. 59) in which recording is underway to the complete state by the close operation, data need only be recorded from the intermediate recording state lead-out blocks to a portion of the contiguous recording zone outermost periphery physical sector number shown in FIG. 59 ((b) in FIG. 59), and data need not be recorded after that portion.

As described above, the optical disc according to one embodiment of the invention has the contiguous recording zone outermost periphery physical sector number of layer 1, and can freely select an area attribute from lead-out blocks to the lead-out recordable management area, thus shortening the close operation time.

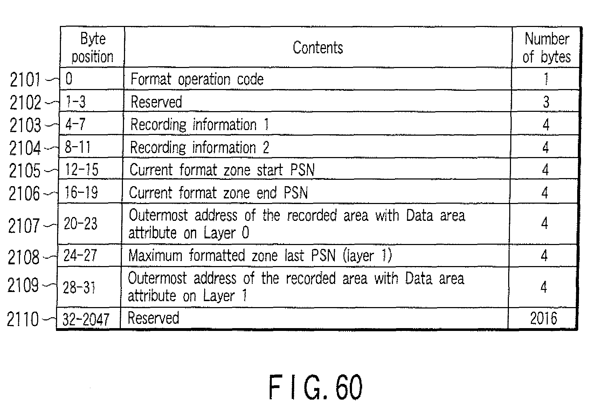

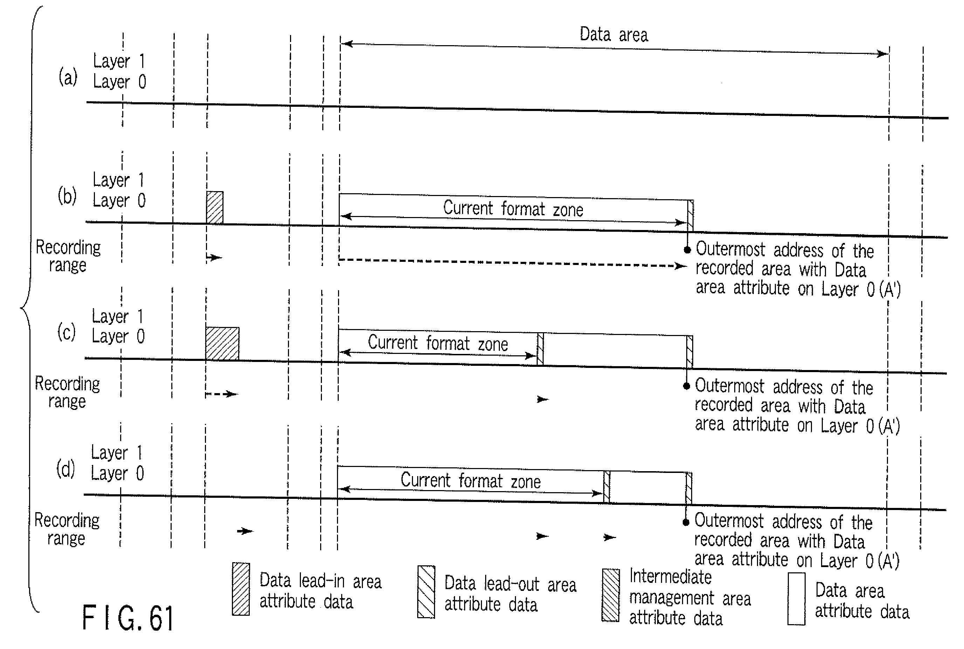

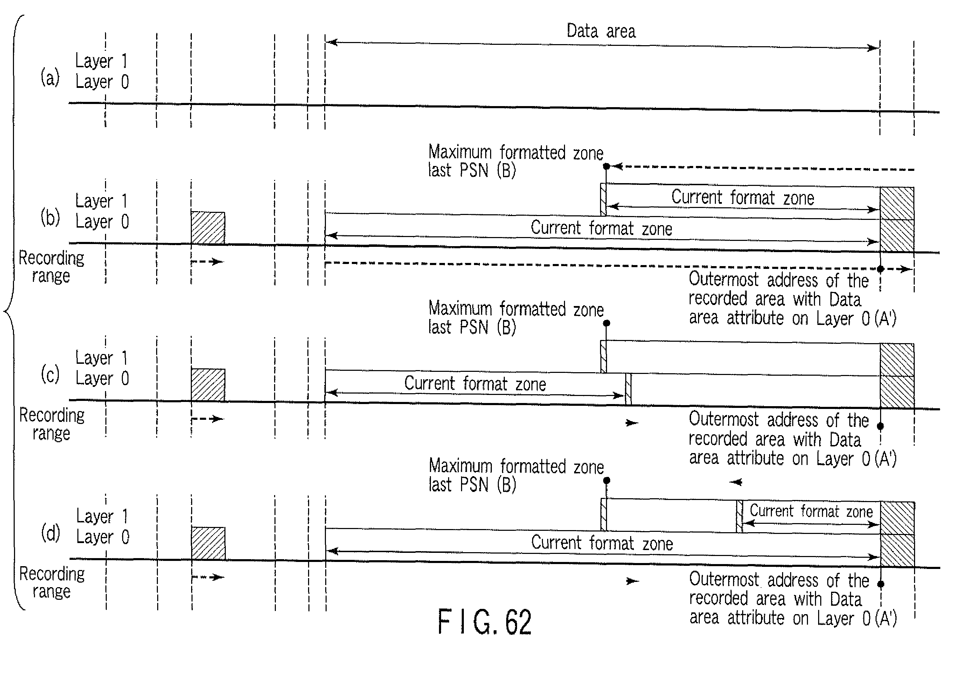

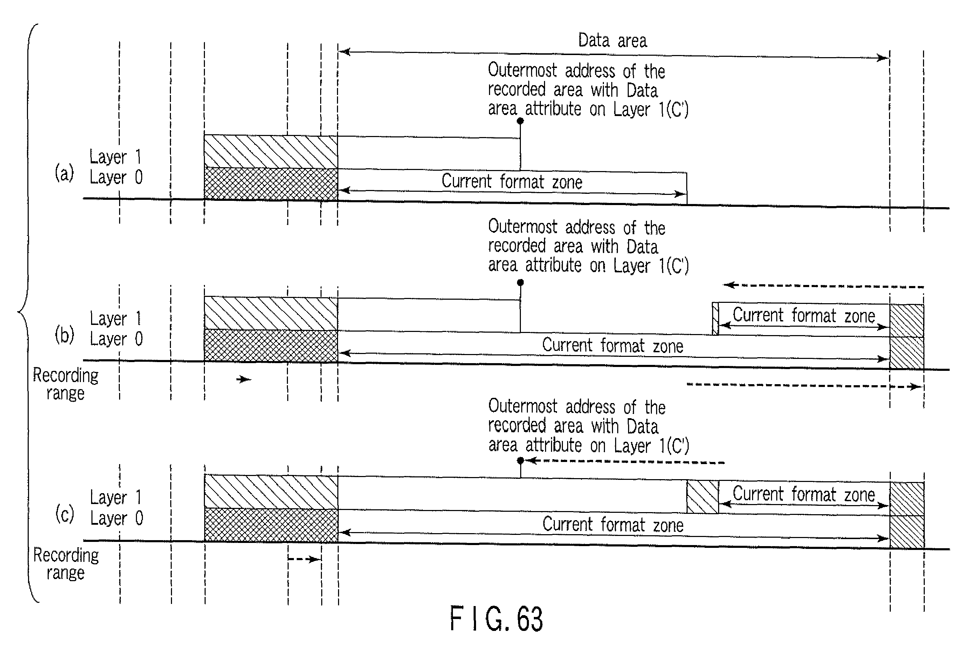

FIGS. 60 to 63 are figures where another embodiment of FIGS. 21A, 57, 58, and 59. In other words, FIG. 21A can be replaced with another expression such as the table in FIG. 60. A formatted zone is the recorded area with the data that data type is data area attribute and Last PNS of a zone is same meaning as the outermost address of the zone in the layer 0.

## Claims

1. An information recording medium which is configured to record information, **characterized by** comprising:
a first area (2105, 2106) which stores first information indicating a range of a currently formatted area; and
a second area (2107, 2108) which stores second information indicating a range of a previously formatted area.

2. The medium according to claim 1, **characterized in that** the second information stored in the second area is information indicating a range of a formatted area used just before the current timing.

3. The medium according to claim 1, **characterized in that** the second information stored in the second area is information indicating a range of a maximum formatted area of previously formatted areas.

4. An information recording medium **characterized by** comprising:
a plurality of recording layers (481, 482) which are configured to record information; and
areas (491, 492) which store information indicating ranges of formatted areas of the individual recording layers.

5. An information recording medium which is configured to rewrite information, **characterized by** comprising:
a plurality of management information areas (152, 153) which store management information for an information recording and playback apparatus,
wherein a first management information area (152) of the plurality of management information areas is an area which stores a copy of management information stored in a second management information area of the plurality of management information areas, and
the information recording medium is configured to store management information of a plurality of format methods, and is configured to store management information of all types of format methods as management information for the information recording and playback apparatus of one type.

6. The medium according to claim 5, **characterized in that** each management information area includes a first area which stores management information for the information recording and playback apparatus, and a second area which stores information indicating a recording state of the first area.

7. An information recording method for recording information on an information recording medium which is configured to rewrite information, and independently comprises a first area that stores user information, and a second area that stores management information including information indicating a formatted area for the user information, **characterized by** comprising:
a step of formatting the first area; and
a step of formatting the second area.

8. An information recording method for recording information on an information recording medium which is configured to rewrite information, and independently comprises a first area that stores user information, and a second area that stores management information including information indicating a formatted area for the user information, **characterized by** comprising:
formatting the first area,
wherein information indicating a range of an area which was previously formatted in the step is held.

9. The method according to claim 8, **characterized in that** when the information indicating the previously formatted range is stored, and the previously formatted range is broader than a range to be formatted, recording for formatting re-starts from the previously formatted range, and
when the previously formatted range is narrower than a range to be formatted, recording for shifting a marker indicating a lead-out position of a formatted area is performed.

10. An information recording method for recording information on an information recording medium which is configured to rewrite information, and independently comprises a first area that stores user information, and a second area that stores management information including information indicating a formatted area for the user information, **characterized by** comprising:
a step of erasing, when the formatted information recording medium is to be re-formatted, a marker indicating a lead-out position of the formatted area recorded in the second area; and
a step of re-recording a marker indicating a lead-out position of a new formatted area.
